# EUROPÄISCHE PATENTANMELDUNG

(11) **EP 2 244 031 A2**
(43) Veröffentlichungstag der Anmeldung: **27.10.2010**
(21) Anmeldenummer: 09169371.3
(22) Anmeldetag: 03.09.2009
(51) Int. Cl.: F24J 2/05, F24J 2/26, F24J 2/46, F24J 2/50

(54) **Solarkollektor, Verbundscheibe und Absorber sowie Verwendung eines derartigen Absorbers**

(30) Priorität: 24.04.2009 DE 102009018520
(71) Anmelder: IP Bewertungs AG, 20354 Hamburg (DE)
(72) Erfinder: Kruse, Dr.-Ing., Jan, 22089, Hamburg (DE); Rostami, Dr., Bardia, 22299, Hamburg (DE); Uelzen, Dr.-Ing., Thorsten, 21698, Bargstedt (DE)
(74) Vertreter: Zech, Stefan Markus

(57) **Zusammenfassung**

Die Erfindung bezieht sich auf einen Solarkollektor mit einem Absorber (100), der eine im Gebrauch der Sonneneinstrahlung zugewandte Vorderseite (102), und eine im Gebrauch der Sonneneinstrahlung abgewandte Rückseite (103) aufweist, wobei eine transparente Abdeckung (200) vorgesehen ist, die der Vorderseite (102) des Absorbers (100) im Wesentlichen planparallel gegenüberliegend angeordnet ist, und eine Rückwand (300) vorgesehen sind, die der Rückseite (103) des Absorbers (100) gegenüberliegend angeordnet ist. Die Erfindung zeichnet sich dadurch aus, dass die Rückwand (300) als transparente Scheibe, insbesondere Glasscheibe oder Kunststoffscheibe, ausgebildet ist und wenigstens bereichsweise ein Infrarotstrahlen reflektierendes Medium umfasst, das in Richtung der Rückseite (103) des Absorbers (100) reflektierend wirksam ist. Die Erfindung betrifft ferner eine Verbundscheibe, insbesondere Verbundglasscheibe (1), einen Absorber (100) und eine Verwendung eines derartigen Absorbers (100). Dieser Absorber kann auch eine Beschichtung zur Reduzierung der Wärmeemission (LOW-E) aufweisen.

## Beschreibung

Die Erfindung betrifft einen Solarkollektor gemäß dem Oberbegriff des Anspruchs 1. Die Erfindung betrifft ferner eine Verbundscheibe, einen Absorber sowie eine Verwendung eines derartigen Absorbers. Ein Solarkollektor der eingangs genannten Art ist beispielsweise aus der DE 10 2006 006 718 B4 bekannt.

Die im Folgenden näher erläuterte Erfindung bezieht sich in speziellen Ausführungsformen auf thermische Solarkollektoren und hier im Speziellen auf die Ausführung der den Kollektor nach außen begrenzenden Scheibe, insbesondere Glasscheibe oder Glasröhre.

Auf dem Gebiet der Solarkollektortechnik ist es grundsätzlich bekannt, im Bereich unterhalb einer glasförmigen Abdeckscheibe einen Absorber vorzusehen, der die in der Solarstrahlung enthaltene Energie an das Wärmeträgermedium überträgt und dieses somit erwärmt. Hierbei werden Solarkollektoren vornehmlich als Flachkollektoren oder als Röhrenkollektoren ausgeführt.

Flachkollektoren zeichnen sich dadurch aus, dass die vornehmlich aus Glas bestehende Abdeckscheibe flächig ausgebildet ist und im Allgemeinen planparallel zum Absorberelement angeordnet ist. Spezielle Ausführungsformen sehen in diesem Zusammenhang vor, dass anstelle von glasförmigen Abdeckscheiben transparente, Kunststoff enthaltende Abdeckscheiben vorgesehen werden. In jedem Falle wird darauf geachtet, dass die Abdeckscheiben von Solarkollektoren für Strahlung im Wellenlängenbereich der solaren Strahlung in einem möglichst großen Bereich transparent, also durchlässig sind.

Neben den zuvor beschriebenen Flachkollektoren sind Röhrenkollektoren bekannt, bei denen innerhalb der Röhre ein Absorberelement vorgesehen ist. Derartige Röhrenkollektoren werden wahlweise von einem Wärmeträgerfluid durchströmt, das die Wärme zu einem Gebäudeheizsystem führt. Alternative Ausführungsformen sehen vor, dass die einzelnen Röhren eines Röhrenkollektors hydraulisch von diesem Wärmeträgerfluid entkoppelt sind.

Die derzeit am häufigsten zum Einsatz kommenden Solarkollektoren sind Flachkollektoren, die in der Regel über einen Kollektorkasten, vornehmlich aus einem metallischen Material oder Blech, verfügen, in den mit Hilfe entsprechender Dichtelemente eine Abdeckscheibe eingesetzt ist. Der durch ein Wärmeträgerfluid durchströmte Absorber ist im Inneren des Solarkollektorkastens angeordnet, der darüber hinaus über wenigstens zwei Anschlusselemente als Zu- und Ablauf verfügt, durch die ein Wärmeträgerfluid von außerhalb des Solarkollektors in den Absorber und von diesem wieder herausgeführt werden kann. Hierbei ist es ebenfalls bekannt, dass der Wirkungsgrad eines Solarkollektors grundsätzlich umso höher ist, desto hochwertiger die Glasabdeckung ist, so dass teilweise die Verwendung von Isolierglas für thermische Solarkollektoren vorgeschlagen wird.

Des Weiteren ist aus der eingangs genannten DE 10 2006 006 718 B4 ein Solarkollektor bekannt, bei dem das tragende Element durch die als Glasscheibe ausgeführte Abdeckscheibe gebildet wird. Auf der Unterseite dieser Glasscheibe und beabstandet hierzu befindet sich ein Absorber, der mit geeigneten Befestigungsmitteln an der Abdeckscheibe befestigt ist. Des Weiteren sind auf der Unterseite der Abdeckscheibe weitere Befestigungsmittel vorgesehen, die eine Befestigung des Solarkollektors auf einem Dach und/oder im Bereich einer Gebäudefassade ermöglichen. Das wesentliche technische Merkmal eines derart ausgeführten Solarkollektors besteht darin, dass auf die Verwendung eines Kollektorkastens verzichtet wird, und die Abdeckscheibe sämtliche Bauteile des Solarkollektors, beispielsweise auch die Anschlüsse für die Zu- und Ableitung des Wärmeträgerfluids, von der Glasscheibe überdeckt werden. Ein derartiger Solarkollektor ermöglicht somit eine sehr kompakte Bauform sowie eine verhältnismäßig einfache und optisch ansprechende Integration in die hierfür vorgesehenen Bauwerke.

Die Aufgabe der vorliegenden Erfindung besteht darin, einen Solarkollektor bereitzustellen, der einerseits eine kompakte Bauform und gleichzeitig einen zufriedenstellenden, insbesondere verbesserten, Wirkungsgrad aufweist. Ferner liegt der Erfindung die Aufgabe zugrunde, eine Verbundscheibe, die zur Energieumwandlung aus solarer Energie geeignet ist, sowie einen Absorber und eine Verwendung eines derartigen Absorbers anzugeben.

Erfindungsgemäß wird diese Aufgabe im Hinblick auf den Solarkollektor durch den Gegenstand des Patentanspruchs 1, im Hinblick auf die Verbundscheibe durch den Gegenstand des Patentanspruchs 15, im Hinblick auf den Absorber durch den Gegenstand des Anspruchs 16 und im Hinblick auf die Verwendung des Absorbers durch den Gegenstand des Anspruchs 18 gelöst.

Die Erfindung beruht auf dem Gedanken, einen Solarkollektor mit einem Absorber anzugeben, der eine im Gebrauch der Sonneneinstrahlung zugewandte Vorderseite und eine im Gebrauch der Sonneneinstrahlung abgewandte Rückseite aufweist, wobei eine transparente Abdeckung vorgesehen ist, die der Vorderseite des Absorbers im Wesentlichen planparallel gegenüberliegend angeordnet ist. Dabei ist der Rückseite des Absorbers ein Infrarotstrahlen reflektierendes Medium zugeordnet, das in Richtung des Absorbers reflektierend wirksam ist. Reflektion in Richtung des Absorbers bedeutet im Sinne der vorliegenden Anmeldung, dass eine rückstrahlende Beschichtung oder Fläche auf der der Sonne abgewandten Seite des Absorbers - entweder beabstandet dazu oder auf die Rückseite des Absorbers aufgebracht - vorgesehen ist.

Die Erfindung basiert auf der Idee, der Rückseite bzw. der rückseitigen Oberfläche des Absorbers ein Infrarotstrahlen reflektierendes Medium zuzuordnen, das die von dem Absorber abgestrahlte Wärmestrahlung, insbesondere Infrarotstrahlung, zumindest teilweise reflektiert. Energieverluste über die Rückseite des Absorbers bzw. die der Sonneneinstrahlung abgewandten Seite des Absorbers werden somit reduziert. Dabei kann das Infrarotstrahlen reflektierende Medium in der Rückseite, d.h. in der rückseitigen Oberfläche des Absorbers angeordnet sein bzw. die rückseitige Oberfläche des Absorbers bilden. Das Infrarotstrahlen reflektierende Medium kann auch in einem Abstand zur Rückseite des Absorbers angeordnet sein.

Vorzugsweise umfasst das Infrarotstrahlen reflektierende Medium eine Infrarotstrahlen reflektierende Beschichtung und/oder Infrarotstrahlen reflektierende Zusätze. Die Infrarotstrahlen reflektierende Beschichtung kann direkt auf der Rückseite des Absorbers bzw. der rückseitigen Oberfläche des Absorbers angeordnet sein. Das bedeutet, dass die rückseitige Oberfläche bzw. Rückseite des Absorbers vorzugsweise mit der Infrarotstrahlen reflektierenden Beschichtung versehen ist. Alternativ kann die Rückseite des Absorbers Infrarotstrahlen reflektierende Zusätze aufweisen. Die Infrarotstahlen reflektierende Beschichtung bzw. die Infrarotstrahlen reflektierenden Zusätze können auch in anderen Bauteilen des Solarkollektors angeordnet sein, die beabstandet zur Rückseite des Absorbers angeordnet sind. Wesentlich ist dabei, dass die Infrarotstrahlen reflektierende Beschichtung bzw. die Infrarotstrahlen reflektierenden Zusätze der Rückseite des Absorbers zugeordnet sind. Die Infrarotstrahlen reflektierende Beschichtung bzw. die Infrarotstrahlen reflektierenden Zusätze, allgemein das Infrarotstrahlen reflektierende Medium, ist also auf der der Sonneneinstrahlung abgewandten Seite des Absorbers angeordnet. Dabei ist nicht ausgeschlossen, dass zusätzlich der Vorderseite des Absorbers ein Infrarotstrahlen reflektierendes Medium zugeordnet ist bzw. die Vorderseite des Absorbers ein Infrarotstrahlen reflektierendes Medium umfasst, das Infrarotstrahlen auf den Absorber hin reflektiert.

Der Solarkollektor kann gemäß einer bevorzugten Ausführungsform eine Rückwand aufweisen, die der Rückseite des Absorbers gegenüberliegend angeordnet ist. Die Rückwand kann dabei als transparente Scheibe, insbesondere Glasscheibe oder Kunststoffscheibe, ausgebildet sein und wenigstens bereichsweise das Infrarotstrahlen reflektierende Medium umfassen, das in Richtung der Rückseite des Absorbers reflektierend wirksam ist.

Diese Ausführungsform beruht auf der Idee, die die äußere Begrenzung bildende Abdeckung bzw. Rückwand, insbesondere Glas, eines Solarkollektors nicht nur im Hinblick auf seine Transparenz für Sonnenlicht zu nutzen, sondern darüber hinaus auf geeignete Weise zusätzlich oder ergänzend zur Wärmedämmung des Kollektors einzusetzen.

In diesem Zusammenhang ist es bevorzugt, wenn die Abdeckung und die Rückwand jeweils ein Glas, insbesondere eine Glasscheibe, umfassen, das die äußere Begrenzung des Solarkollektors bildet. Die der Rückwand zugeordnete Glasscheibe kann das Infrarotstrahlen reflektierende Medium aufweisen. Zusätzlich kann die Rückseite des Absorbers mit einem Infrarotstrahlen reflektierenden Medium bzw. einem Medium, das die Emission von Strahlung in Richtung auf die Rückseite vermindert, versehen sein, so dass insgesamt wenigstens zwei Infrarotstrahlen reflektierende Komponenten, insbesondere Beschichtungen, der Rückseite des Absorbers zugeordnet sind.

Es ist auch möglich, dass anstelle der Rückwand ein rückseitiger mechanischer Schutz oder eine entsprechende Schutzbeschichtung für den Absorber vorgesehen ist. Beispielsweise kann der erfindungsgemäße Solarkollektor in einer möglichen Ausführungsform auf der der Sonneneinstrahlung abgewandten Seite durch die Rückseite des Absorbers bzw. die rückseitige Oberfläche des Absorbers begrenzt sein. Bei einer derartigen Ausführungsform ist also kein Bauteil, konkret keine Rückwand, notwendig, die in einem Abstand zur Rückseite des Absorbers angeordnet ist. Der Solarkollektor kann vielmehr auf der Vorderseite des Absorbers eine Abdeckung umfassen, wobei die Rückwand des Solarkollektors im Wesentlichen durch den Absorber selbst gebildet ist. Die kleinste bauliche Einheit gemäß einer konkreten Ausführungsform der vorliegenden Erfindung besteht daher aus einem Absorber, der eine im Gebrauch der Sonneneinstrahlung zugewandte transparente Abdeckung aufweist, wobei gleichzeitig der Rückseite des Absorbers direkt oder räumlich beabstandet ein Infrarotstrahlen reflektierendes Medium zugeordnet ist, das in Richtung des Absorbers reflektierend wirksam ist. Eine derartige bauliche Einheit kann an verschiedenen Aufstellungs- und Nutzungsorten eingesetzt bzw. integriert werden, beispielsweise in einem Dach- oder Fassadenaufbau eines Gebäudes. Es lässt sich insofern eine besonders kompakte Bauform des Solarkollektors erreichen. An konkreten Montageorten können auf der Rückseite des Absorbers zusätzlich Dämmmaterialien zugeordnet sein, wobei nicht ausgeschlossen ist, dass die Dämmmaterialien gebäudeseitig fixiert sind. Die Dämmmaterialien können auch mit der Rückseite des Absorbers verbunden sein.

In einer besonders vorteilhaften Ausführungsform umfasst die Abdeckung und/oder die Rückwand, insbesondere das Infrarotstrahlen reflektierende Medium, ein Wärmedämmglas. Insbesondere wird hierzu vorgeschlagen, ein Wärmedämmglas zu verwenden, das sicherstellt, dass vom Absorber emittierte Infrarotstrahlung von der dem Absorber gegenüberliegenden Seite des entsprechenden Glases reflektiert wird, so dass die Wärme, die aus der Energie der Infrarotstrahlung resultiert, ebenfalls dem Absorber zugeführt und dann an das den Absorber durchströmende Wärmeträgerfluid übertragen wird.

Unter Wärmedämmglas wird gemäß dieser Beschreibung ein Glas verstanden, das zumindest auf einer Seite geeignet ist, Infrarotstrahlung in erhöhtem Maße zu reflektieren. Das Wärmedämmglas bzw. allgemein das Infrarotstrahlen reflektierende Medium weist also im Bezug auf langwelliges Licht, insbesondere infrarote Strahlung, im Vergleich zu üblichem Glas, insbesondere Fensterglas, erhöhte Reflexionseigenschaften auf. Vorzugsweise beträgt der Reflexionsgrad des Wärmedämmglases bzw. des Infrarotstrahlen reflektierenden Mediums gegenüber infrarotem Licht mehr als 20%, insbesondere mehr als 30%, insbesondere mehr als 40%, insbesondere mehr als 50%, insbesondere mehr als 60%, insbesondere mehr als 70%, insbesondere mehr als 80%, insbesondere mehr als 90%. Hierzu kann das Glas mit geeigneten Zusätzen versehen und/oder beschichtet sein.

Ausdrücklich wird darauf hingewiesen, dass es grundsätzlich unerheblich ist, wie der Solarkollektor von seinem konstruktiven Aufbau gestaltet ist. Insbesondere ist die hier vorgeschlagene technische Lösung sowohl für Röhrenkollektoren als auch für Flachkollektoren einsetzbar. Genauso ist es unerheblich, in welchem Umfang das Wärmedämmglas verwendet wird. Wesentlich für die Realisierung der erfinderischen Lösung ist lediglich, dass dem Absorber gegenüberliegend ein Infrarotstrahlen reflektierendes Medium, beispielsweise ein Wärmedämmglas, vorgesehen ist, das die vom Absorber abgestrahlte Infrarotstrahlung reflektiert, so dass die aus der Strahlungsenergie resultierende Energie nicht verloren geht, sondern ebenfalls dem Absorber und somit dem Wärmeträgerfluid zugeführt werden kann.

In diesem Zusammenhang verwirklicht eine ganz besonders geeignete Ausführungsform der Erfindung einen Solarkollektor besonders kompakter Bauweise, indem eine Verbundglaskonstruktion in einer Sandwichbauweise vorgesehen ist, wobei der Absorber zwischen zwei Glasscheiben angeordnet ist, die jeweils die Abdeckung und die Rückwand bilden. Insbesondere ist der Solarkollektor in dieser Ausführungsform nach Art einer Verbundglaskonstruktion in einer Sandwichbauweise ausgeführt. Hierbei ist zwischen zwei Glasscheiben ein Absorber vorgesehen, der als Blech mit entsprechenden Kanälen oder in Form von Rohrleitungen ausgeführt sein kann. Wenigstens eine der Scheiben, insbesondere beide Scheiben, zwischen denen sich der Absorber befindet, verfügt über das Infrarotstrahlen reflektierende Medium, insbesondere Wärmedämmglas. Die Vollmaterialglasscheibe enthält somit Partikel und/oder ist mit einer Beschichtung versehen, die zumindest eine Teilreflexion der vom Absorber abgestrahlten Infrarotstrahlung ermöglicht.

Das Infrarotstrahlen reflektierende Medium kann pigmentartige Körper, insbesondere Glaskugeln, umfassen, die auf der der Rückseite des Absorbers zugewandten Seite der Rückwand angeordnet sind. Insbesondere sieht eine weitere Ausführungsform der Erfindung vor, dass dem Absorber gegenüberliegend, bevorzugt auf der der Sonneneinstrahlung abgewandten Seite, zumindest abschnittsweise eine Füllung von pigmentartigen Körpern, insbesondere Glaskugeln, vorgesehen ist, die wiederum die Eigenschaft aufweisen, vom Absorber abgestrahlte Infrarotstrahlung zu reflektieren. So könnte beispielsweise auf der Rückseite eines Absorbers eines plattenförmigen Solarkollektors eine entsprechende Glaskugelpackung vorgesehen sein, die die vom Solarabsorber abgestrahlte Infrarotstrahlung reflektiert.

Die Abdeckung und die Rückwand können vom Absorber beabstandet angeordnet und durch einen Rahmen verbunden sein. Eine weitere Ausgestaltung der Erfindung sieht also vor, dass die beiden, beabstandet zum Absorber und diesen einschließenden Scheiben mit Hilfe eines Rahmens miteinander verbunden sind. Auf diese Weise wird eine sehr kompakte Verbundglaskonstruktion geschaffen.

Zwischen der Abdeckung und der Rückwand kann ein Scheibenzwischenraum vorgesehen sein, der gegenüber der Umgebung gasdicht abgeschlossen ist. Vorzugsweise ist der Bereich bzw. Scheibenzwischenraum zwischen den Glasscheiben, in dem der Absorber angeordnet ist, gasdicht gegenüber der Umgebung abgedichtet, so dass es denkbar ist, diesen Innenraum eines Verbundglas-Solarkollektors zu vakuumieren, mit einem Schutzgas zu versehen und/oder mit anderen Materialien, insbesondere Dämmstoffen, zu füllen. Der Scheibenzwischenraum kann im Wesentlichen einbautenfrei gestaltet sein. Das bedeutet, dass der Scheibenzwischenraum einen Hohlraum bildet, der durch den Absorber und die Rückwand begrenzt ist. Der Scheibenzwischenraum kann ausschließlich mit einem Gas gefüllt oder vakuumiert sein. Analog zu einem hinteren Scheibenzwischenraum zwischen dem Absorber und der Rückwand kann ein vorderer Scheibenzwischenraum zwischen dem Absorber und der Abdeckung gebildet sein. Der vordere Scheibenzwischenraum ist vorzugsweise ebenfalls einbautenfrei gestaltet.

Der Solarkollektor kann ferner in Form einer Verbundglasscheibe ausgeführt sein, die zwei außen angeordnete, die Abdeckung und die Rückwand bildende Glasscheiben und im Inneren den Absorber aufweist. In einer ganz speziellen Ausführungsform der Erfindung ist der Solarkollektor in Form einer Verbundglasscheibe ausgeführt, die über zwei außen liegende Glasscheiben verfügt und im Inneren den erwähnten Absorber, insbesondere ein Absorberblech, aufweist. Wenigstens eine der beiden den Absorber überdeckenden Glasscheiben ist hierbei derart ausgeführt, dass vom Absorber abgestrahlte Infrarotstrahlung reflektiert wird.

Die dem Absorber zugewandten Oberflächen der Glasscheiben können zumindest abschnittsweise das Infrarotstrahlen reflektierende Medium umfassen. In einer ersten besonderen Weiterbildung des oben genannten Verbundglas-Solarkollektors, insbesondere des Solarkollektors nach Anspruch 9, sind die dem Absorber zugewandten Seiten sowohl der der Sonneneinstrahlung zugewandten Glasscheibe, als auch der sich auf der Rückseite des Absorbers befindenden Glasscheibe derart ausgeführt, dass die dem Absorber zugewandten Oberflächen der Scheiben zumindest abschnittsweise vom Absorber abgestrahlten Infrarotstrahlung reflektieren. In diesem Zusammenhang ist es denkbar, die entsprechenden Scheiben als Wärmedämmglas auszuführen, indem das Glas mit geeignetem Material, beispielsweise Partikeln, angereichert wird und/oder entsprechend beschichtet wird. Ein wesentlicher Gedanke hierbei ist es, dass auf diese Weise nicht nur von der Vorderseite des Absorbers abgestrahlte Infrarotstrahlung, sondern gleichzeitig bzw. zusätzlich von deren Rückseite abgestrahlte Infrarotstrahlung von den jeweiligen dem Absorber gegenüberliegenden Scheiben reflektiert werden.

Ausdrücklich wird auch darauf hingewiesen, dass das gleiche Prinzip bei Röhrenkollektoren genutzt werden kann, indem die entsprechende Röhre zumindest abschnittsweise als Wärmedämmglas, mit entsprechenden Partikeln innerhalb des Glases und/oder mit einer Beschichtung, die Infrarotstrahlung reflektiert, versehen ist.

Sobald bei den zuvor beschriebenen technischen Lösungen nunmehr Sonneneinstrahlung durch die der Sonne zugewandten Seite des Solarkollektors auf den Absorber auftrifft, wird diese Strahlung auf dem Absorber, insbesondere dem Absorberblech, in Wärme umgewandelt und an das dem Absorber durchströmende Wärmeträgerfluid übertragen. Zweckmäßig bei der konstruktiven Gestaltung eines Solarkollektors ist in diesem Zusammenhang, dass innerhalb des Kollektors entsprechende Wärmedämmmaterialien und/oder ein Absorber, bei dem die Emission von Infrarotstrahlung auf seiner Rückseite vermindert ist, vorgesehen sind, die einen Wärmeverlust des Wärmeträgerfluids, der insbesondere durch die Emission von Wärmestrahlung, also Infrarotstrahlung, entsteht, verhindern. Bei den aus dem Stand der Technik bekannten Kollektoren, vor allem Flachkollektoren, wird zu diesem Zweck isolierendes Material, wie etwa Steinwolle oder Polymerschäume, zur Isolierung eingesetzt. Nach einem bevorzugten Aspekt der vorliegenden Erfindung ist es nunmehr möglich, auf derartige Materialien zur Isolierung, die vor allem einen kompakten Aufbau des Solarkollektors verhindern, zumindest teilweise zu verzichten. So kann wahlweise bei Verwendung von Wärmedämmglas bzw. einem entsprechend beschichteten Glas, insbesondere allgemein einer transparenten Rückwand mit einem Infrarotstrahlen reflektierendem Medium, auf der Rückseite des Absorbers vollständig auf zusätzliche Dämmmaterialien verzichtet werden oder zumindest die Menge des verwendeten Materials eingeschränkt werden.

Durch die Verwendung einer Rückwand mit einem Infrarotstrahlen reflektierenden Medium gemäß einer Ausführungsform der vorliegenden Erfindung, insbesondere durch die Verwendung von Wärmedämmglas, wie es aus der Isolierverglasung von Gebäuden bekannt ist, kommt der Isolierglasaufbau vorteilhaft zum Tragen.

In diesem Zusammenhang wird darauf hingewiesen, dass gemäß dieser Beschreibung unter Wärmedämmglas ein Glas verstanden wird, das durch Verwendung spezieller Herstellungstechniken derart ausgeführt ist, dass es eine möglichst geringe Wärmedurchlässigkeit, vor allem eine geringe Durchlässigkeit für Wärmestrahlung, also Infrarotstrahlung, aufweist. Dies wird beispielsweise durch eine dünne Metallbeschichtung auf der Oberfläche solcher Gläser, die auch als Low-E-Gläser oder k-Gläser bezeichnet werden, realisiert.

Diese so genannten Wärmedämmgläser besitzen jedoch eine verringerte Transparenz, so dass üblicherweise deren Transmission im Bereich des sichtbaren Lichts lediglich 70 - 90% der ansonsten verwendeten Gläser beträgt. Dies wiederum führt dazu, dass 10 - 30% der Sonneneinstrahlung nicht auf den Absorber gelangt, sofern die der Sonneneinstrahlung zugewandte Glasscheibe ebenfalls als Wärmedämmglas ausgeführt ist. Eine Verringerung der Sonneneinstrahlung durch die dem Sonnenlicht zugewandten Glasscheibe verringert zwangsläufig die Leistungsfähigkeit eines Solarkollektors.

Aufgrund dieser Erkenntnis sieht eine ganz besonders geeignete Ausführungsform der Erfindung vor, dass der Solarkollektor als Flachkollektor oder Röhrenkollektor ausgebildet ist, wobei ein erster Glasbereich, insbesondere eine erste Glasscheibe, auf der der Sonneneinstrahlung zugewandten Seite des Solarkollektors als Solarglasscheibe und ein zweiter Glasbereich, insbesondere eine zweite Glasscheibe, auf der der Sonneneinstrahlung abgewandten Seite des Solarkollektors als Wärmedämmglas ausgebildet ist. Mit anderen Worten ist also vorgesehen, dass die Glasscheibe (beispielsweise Flachkollektor) oder der Glasbereich (beispielsweise Röhrenkollektor) auf der der Sonneneinstrahlung zugewandten Seite des Kollektors als Solarglasscheibe, also mit eisenoxidarmen Glas, ausgeführt ist, während die auf der der Sonneneinstrahlung abgewandten Seite des Kollektors vorgesehene Glasscheibe bzw. der Glasbereich als Wärmedämmglas ausgebildet ist, das vom Absorber emittierte Infrarotstrahlung reflektiert. Somit wird bei dieser Ausführungsform als Glasscheibe, die der Sonneneinstrahlung zugewandt ist, keine Wärmedämmscheibe eingesetzt, sondern vorzugsweise eine Solarglasscheibe, die über eine besondere Durchlässigkeit für Solarstrahlung verfügt. Solargläser sind Gläser mit vergleichsweise geringem Eisenoxidanteil, so dass eine möglichst hohe Transmission erreichbar ist bzw. erreicht wird.

Im Gegensatz zu der Glasscheibe auf der dem Sonnenlicht zugewandten Seite des Solarkollektors ist auf der Rückseite eines solchen Kollektors die Verwendung einer als Wärmedämmglas ausgeführten Glasscheibe bzw. einer Scheibe, die derart ausgeführt ist, dass sie über erhöhte reflektive Eigenschaften in Bezug auf Infrarotstrahlung verfügt, ausgeführt. Letztgenannte Scheibe umfasst vorzugsweise das Infrarotstrahlen reflektierende Medium. Wie bereits erwähnt worden ist, kann die isolierende Eigenschaft einer entsprechenden Glasscheibe durch den zusätzlichen Einsatz von Steinwolle, Polymerschäumen oder isolierendem Granulat, unterstützt werden. Als isolierendes Granulat kommen in diesem Zusammenhang grundsätzlich auch Schüttungen aus einem Glasmaterial, insbesondere aus Glaskugeln, in Frage, die ebenfalls über erhöhte Wärmedämmeigenschaften, beispielsweise durch Verwendung des beschriebenen Wärmedämmglases, verfügen.

Gemäß einem nebengeordneten Aspekt beruht die Erfindung auf dem Gedanken, eine Verbundscheibe, insbesondere Verbundglasscheibe, mit einem Rahmen anzugeben, der wenigstens zwei voneinander beabstandet und zueinander planparallel angeordnete, transparente Scheiben gasdicht verbindet, wobei die transparenten Scheiben jeweils ein nach innen wirkendes, Infrarotstrahlen reflektierendes Medium aufweisen. Dabei ist zwischen den transparenten Scheiben wenigstens ein Absorber für Solarenergie angeordnet.

Eine ganz besonders ausgeführte Weiterbildung bzw. nebengeordnete Variante der Erfindung sieht somit vor, einen Solarkollektor bereitzustellen, der in Form einer Verbundglasscheibe ausgebildet ist. Eine derartige Verbundscheibe wird durch zwei Scheiben, vorzugsweise aus einem Glasvollmaterial, gebildet, die mit Hilfe einer entsprechenden Umrandung bzw. einem Rahmen miteinander verbunden sind, wobei der Innenraum gasdicht abgedichtet ist. Im Inneren dieser Glasscheibe, also in dem Hohlraum zwischen der Umrandung bzw. dem Rahmen und den beiden, vorzugsweise ein Glasvollmaterial umfassenden, Scheiben befindet sich ein Absorber, der von einem Wärmeträgerfluid durchströmt werden kann. Ein derartiger Solarabsorber kann röhrenförmig oder in Form eines Plattenabsorbers ausgebildet sein. Die Anschlüsse des Absorbers für Zulaufleitungen und Ablaufleitungen des Wärmeträgerfluids sind vorzugsweise nach außen geführt und ebenfalls gasdicht abgedichtet. Der verbleibende Hohlraum im Inneren des glasförmigen Kollektors kann entweder vakuumiert oder mit einem Schutzgas, besonders bevorzugt mit Argon, gefüllt sein. Zweckmäßig hierbei ist, dass es im Inneren der Scheibe, insbesondere der Verbundglasscheibe, aufgrund von Temperaturunterschieden nicht zu Kondensationserscheinungen und somit zu einem Beschlagen der Scheiben kommt.

Die beschriebene Verbundglasscheibe, insbesondere gemäß dieser bevorzugten Ausführungsform, verfügt über eine der Sonneneinstrahlung zugewandte Glasscheibe, die aus einem eisenoxidarmen Solarglas gefertigt ist. Die auf der der Sonneneinstrahlung abgewandten Rückseite des Absorbers angeordnete Glasscheibe ist in diesem Fall als Wärmedämmglas ausgeführt, das die vom Absorber abgestrahlte Infrarotstrahlung reflektiert, so dass auch die Energie der Infrarotstrahlung zumindest weitgehend an das den Absorber durchströmende Wärmeträgerfluid übertragen werden kann. Der Aufbau des beschriebenen Solarkollektors zeichnet sich somit vor allem dadurch aus, dass das Prinzip eines Dreifach-Isolierverbundglases Verwendung findet, wobei das üblicherweise mittlere Glas durch ein Absorberblech ersetzt ist. Hierbei müssen die Abstände zwischen den Scheiben bzw. zwischen den Scheiben und dem Absorber sowie die entsprechenden Dichtungen dem Zweck, nämlich der Verwendung dieses Verbundglassolarkollektors zur Solarenergiegewinnung angepasst werden. Insbesondere die teilweise hohen Temperaturgradienten, die zwischen den einzelnen Betriebsphasen des Solarkollektors zu erwarten sind, sind hierbei zu berücksichtigen.

Gegenüber den aus dem Stand der Technik bekannten Solarkollektoren, die aus einem Solarkollektorkasten oder einer entsprechend abgedichteten eingebauten Abdeckscheibe bestehen, weist die hier vorgeschlagene Lösung vor allem den Vorteil auf, dass sie aufgrund eines möglichen Verzichtes oder zumindest einer Reduzierung des verwendeten Isoliermaterials eine wesentlich kompaktere Ausführung, insbesondere eine geringere Bauhöhe, ermöglicht. Gegenüber dem aus der eingangs genannten DE 10 2006 006 718 B4 bekannten Solarkollektor, der auf eine entsprechende rückseitige Begrenzung des Solarkollektors vollständig verzichtet, zeichnet sich der hier vorgeschlagene Kollektoraufbau durch einen wesentlich gesteigerten Wirkungsgrad aus.

Eine ganz besondere Ausführungsform der Erfindung sieht vor, dass die hier vorgeschlagene technische Lösung im Bereich von Röhrenkollektoren eingesetzt wird. In diesem Zusammenhang ist vorteilhaft vorgesehen, entweder die der Sonnenstrahlung abgewandte Rückseite des Röhrenkollektors als Wärmedämmglas auszubilden oder hier eine entsprechende Beschichtung vorzusehen, so dass die vom innerhalb des Röhrenkollektors befindlichen Absorber abgestrahlte Infrarotstrahlung reflektiert wird. In einer speziellen Ausführungsform ist des Weiteren vorgesehen, auf der der Sonnenstrahlung abgewandten Seite des Absorbers eine Beschichtung und/oder eine lose bzw. an der Glasscheibe befestigte Schüttung vorzusehen, die über erhöhte Infrarotreflexionseigenschaften verfügt.

In jedem Falle besteht ein Gedanke darin, die eigentlich für die Einstrahlung der Sonnenstrahlung vorgesehenen Glasflächen zumindest bereichsweise derart auszuführen, dass Infrarotstrahlung von der innerhalb des Solarkollektors befindlichen Oberfläche der Scheibe reflektiert wird. Besonders geeignet ist hierbei eine rückseitig des Absorbers vorgesehene Glasscheibe, da dies eine kompakte Bauform sowie zumindest eine Reduzierung der verwendeten Dämmstoffe ermöglicht.

Gemäß einem weiteren, nebengeordneten Aspekt beruht die Erfindung auf dem Gedanken, einen Absorber, insbesondere für einen eingangs beschriebenen Solarkollektor, anzugeben, wobei der Absorber eine Vorderseite, eine Rückseite und einen Fluidkanal für ein Wärmetauschermedium umfasst. Der Fluidkanal ist zwischen der Vorderseite und der Rückseite angeordnet. Die Rückseite weist dabei zumindest bereichsweise ein Infrarotstrahlen reflektierendes Medium, insbesondere eine Infrarotstrahlen reflektierende Beschichtung, auf, die in Richtung des Fluidkanals reflektierend wirksam ist. Durch das auf der Rückseite des Absorbers angeordnete Infrarotstrahlen reflektierende Medium wird der Wirkungsgrad des Absorbers erhöht, indem die Emission von Wärmeenergie reduziert wird.

Vorzugsweise weist die Vorderseite des erfindungsgemäßen Absorbers zumindest bereichsweise eine Infrarotstrahlen absorbierende Beschichtung auf. Damit wird gewährleistet, dass die Vorderseite, also die der Sonneneinstrahlung zugewandte Seite bzw. Oberfläche des Absorbers, eine hohe Selektivität für Wärmestrahlung bietet. Der Wirkungsgrad des Absorbers wird dadurch weiter gesteigert. Insgesamt ist also vorteilhaft vorgesehen, die Vorderseite des Absorbers mit einer Beschichtung zu versehen, die eine möglichst hohe Absorption und vergleichsweise geringe Emission für Wärmestrahlung, insbesondere Infrarotstrahlung, aufweist. Zweckmäßigerweise wird diese Maßnahme kombiniert mit einer Ausbildung des Absorbers dahingehend, dass auf seiner Rückseite ebenfalls für eine Verminderung der Emission von Wärmestrahlung Sorge getragen ist.

Das auf der Rückseite des Absorbers angeordnete Infrarotstrahlen reflektierende Medium ermöglicht ferner den Einsatz des Absorbers in einem Isolierglasaufbau, wobei auf die hintere, insbesondere der Sonneneinstrahlung abgewandte, Glasscheibe verzichtet werden kann. Der Aufbau eines mit dem erfindungsgemäßen Absorber ausgestatteten Kollektors kann somit kostengünstiger und kompakter realisiert werden. Insbesondere wird mit dem Infrarotstrahlen reflektierenden Medium bzw. der Infrarotstrahlen reflektierenden Beschichtung auf der Rückseite des Absorbers die Wärmeemission reduziert, insbesondere im Bereich der Infrarotstrahlung signifikant vermindert, so dass der Verzicht auf einen rückseitigen isolierenden Aufbau hinter dem Absorber, insbesondere zwischen dem Absorber und einer Rückwand eines Solarkollektors, ermöglicht wird.

Ein weiterer nebengeordneter Aspekt der Erfindung betrifft die Verwendung eines derartigen Absorbers in einem eingangs beschriebenen Solarkollektor bzw. einer eingangs beschriebenen Verbundscheibe.

Im Folgenden wird auf mögliche konstruktive Ausgestaltungen eines erfindungsgemäßen Verbundglas-Solarkollektors eingegangen. Insbesondere wird die Erfindung im Folgenden anhand von Ausführungsbeispielen unter Bezugnahme auf die beigefügten, schematischen Zeichnungen näher erläutert. Darin zeigen:
- Fig. 1: eine perspektivische Querschnittsansicht durch einen Solarkollektor gemäß einem bevorzugten Ausführungsbeispiel;
- Fig. 2: eine Draufsicht auf den Solarkollektor gemäß Fig. 1;
- Figuren 4 - 7: jeweils eine Querschnittsteilansicht durch einen Solarkollektoren nach einem bevorzugten Ausführungsbeispiel;
- Fig. 8: eine Querschnittsteilansicht des Solarkollektors gemäß einem weiteren bevorzugten Ausführungsbeispiel;
- Fig. 9: einen Längsschnitt durch einen Solarkollektor gemäß einem bevorzugten Ausführungsbeispiel;
- Fig. 10: einen Teilquerschnitt durch einen Solarkollektor gemäß einem weiteren bevorzugten Ausführungsbeispiel;
- Fig. 11: eine perspektivische Darstellung eines Absorbers nach einem bevorzugten Ausführungsbeispiel;
- Fig. 12: eine perspektivische Darstellung eines Absorbers nach einem weiteren bevorzugten Ausführungsbeispiel; und
- Fig. 13: eine perspektivische Darstellung eines Solarkollektor-Aufbaus mit einem Absorber gemäß Fig. 11;
- Fig. 14: eine Querschnittsteilansicht des Solarkollektors gemäß einem weiteren bevorzugten Ausführungsbeispiel; und
- Fig. 15: einen Längsschnitt durch einen Solarkollektor gemäß einem bevorzugten Ausführungsbeispiel.

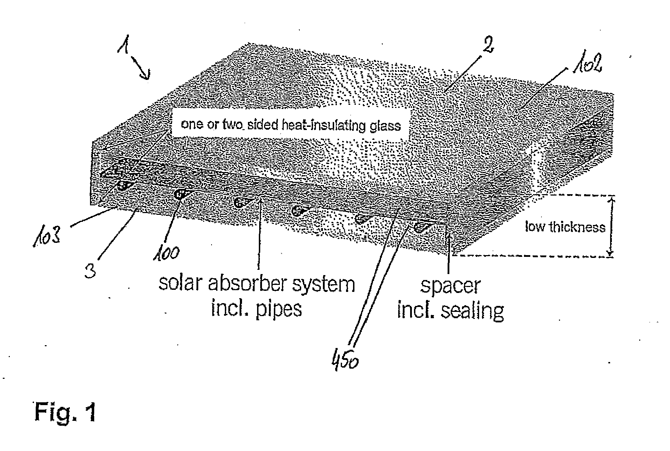

Insbesondere alle dargestellten Möglichkeiten zur Absorberhalterung, Abstandshalterdesign sowie Rohrdurchführungen sind beliebig miteinander kombinierbar, so dass die Erfindung in keinster Weise auf die konkret dargestellten Ausführungsbeispiele nach den Figuren 1 bis 15 beschränkt ist.

In Fig. 1 ist ein Verbundglas-Solarkollektor gemäß einem Ausführungsbeispiel der vorliegenden Erfindung gezeigt, der über eine Solarglasscheibe auf der Vorderseite 102, eine Wärmedämmglasscheibe auf der Rückseite 103 und einen im gasdicht abgedichteten Innenraum angeordneten Absorber 100 verfügt. Innerhalb des Innenraums, also zwischen den beiden Glasscheiben 23 bzw. jeweils zwischen der Vorderseite 102 und dem Absorber 100 sowie der Rückseite 103 und dem Absorber 100 ist Argon als Schutzgas zur Verhinderung von Kondensationserscheinungen im Solarkollektor vorgesehen.

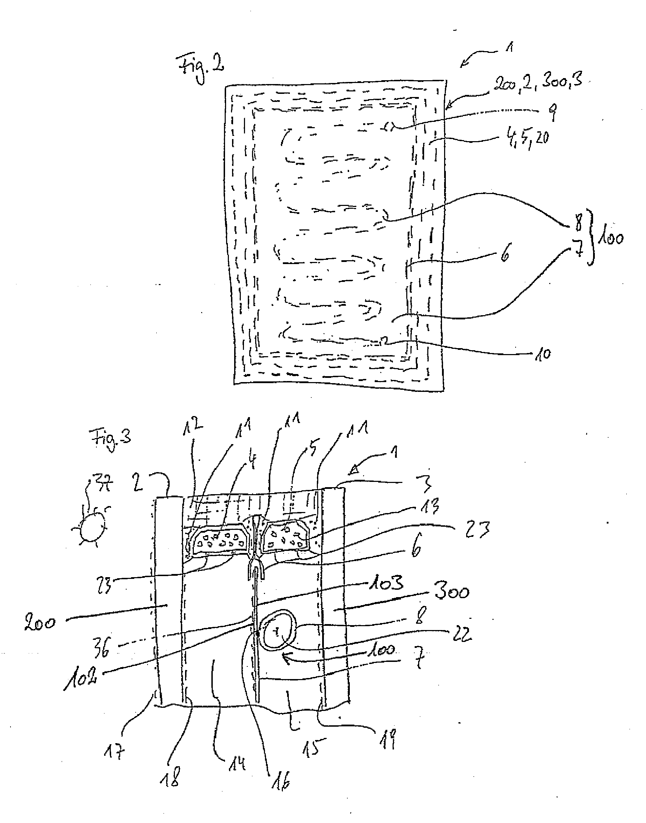

Gemäß Fig. 2 bildet der Solarkollektor bzw. der Verbundglassolarkollektor eine Verbundglasscheibe 1, die eine vordere Glasscheibe 2 und eine hintere Glasscheibe 3 umfasst, wobei zwischen der vorderen Glasscheibe 2 und der hinteren Glasscheibe 3 ein Absorber 100 angeordnet ist. Der Absorber 100 umfasst ein Absorberblech 7 und ein Absorberrohr 8, wobei das Absorberrohr 8 mäanderförmig über das Absorberblech 7 geführt und mit dem Absorberblech 7 fest, insbesondere thermisch wirksam verbunden ist. In einem Randbereich der Verbundglasscheibe 1 sind ferner Abstandshalter 4, 5 angeordnet, die mit dem Absorberblech 7 und/oder der vorderen bzw. hinteren Glasscheibe 2, 3 fest verbunden sind. Die Abstandshalter 4, 5 bilden also Verbindungsstege zwischen dem Absorber 100 und der vorderen Abdeckung 200 bzw. vorderen Glasscheibe 2 und der hinteren Rückwand 300 bzw. hinteren Glasscheibe 3.

In diesem Zusammenhang wird darauf hingewiesen, dass sich die Begriffe "vorne" und "hinten" auf die der Sonneneinstrahlung zugewandte bzw. abgewandte Seite der Verbundglasscheibe 1 beziehen. Insbesondere wird mit vorderer Glasscheibe 2 die der Sonneneinstrahlung zugewandte Glasscheibe bezeichnet, wogegen die hintere Glasscheibe 3 der Sonneneinstrahlung abgewandt ist. Vorzugsweise ist die hintere Glasscheibe 3 bzw. allgemein die Rückwand 300 des Absorbers 100 mit entsprechenden Befestigungsmitteln ausgestattet, die eine Installation der Verbundglasscheibe 1 bzw. allgemein des Solarkollektors auf Gebäudefassaden bzw. Gebäudedächern, insbesondere Schrägdächern, Vordächern oder Carportabdeckungen, ermöglichen. Derartige Befestigungsmittel sind auf der Vorderseite 102 des Absorbers 100 bzw. auf der vorderen Glasscheibe 2 bzw. der Abdeckung 200 üblicherweise nicht vorgesehen. Es ist allerdings nicht ausgeschlossen, dass auch die Abdeckung 200 bzw. die Vorderseite 102 Befestigungsmittel umfasst.

Wie ferner in Fig. 2 zu erkennen, weist die Rückwand 300 bzw. die hintere Glasscheibe 3 Öffnungen für eine Zuleitung 9 sowie eine Ableitung 10 auf, wobei die Zuleitung 9 und die Ableitung 10 die offenen Enden des mäanderförmig angeordneten Absorberrohrs 8 bilden. Die Zuleitung 9 und die Ableitung 10 können jeweils mit geeigneten Verbindungsmitteln mit einem Rohrsystem verbunden werden, so dass ein Wärmetauschermedium 22 durch das Absorberrohr 8 geleitet werden kann, wobei das Wärmetauschermedium 22 beim Durchtritt durch das Absorberrohr 8 durch die aus der Sonneneinstrahlung aufgenommene Wärmeenergie erhitzt wird.

Zur Halterung des Absorbers 100, insbesondere des Absorberblechs 7, ist ein Y-Profil 6 vorgesehen, das sich, wie in Fig. 3 dargestellt, zwischen den Abstandshaltern 4, 5 hindurch erstreckt. Die Gabelung des Y-Profils umschließt dabei das Absorberblech 7.

Insofern bildet das Y-Profil 6 einen Rahmen bzw. eine Nut zur Aufnahme des Absorberblechs 7.

In Fig. 3 wird der Querschnittsaufbau einer Verbundglasscheibe 1 gemäß einem bevorzugten Ausführungsbeispiel verdeutlicht. Die Verbundglasscheibe 1 umfasst eine vordere Glasscheibe 2 und eine hintere Glasscheibe 3, die beabstandet zueinander angeordnet sind. Zwischen der vorderen Glasscheibe 2 und der hinteren Glasscheibe 3 ist das Absorberblech 7 angeordnet, das mit dem Absorberrohr 8 durch eine thermische Verbindung 16 fest verbunden ist. Zwischen dem Absorberblech 7 und der vorderen Glasscheibe 2 ist ein vorderer Scheibenzwischenraum 14 angeordnet. Ein hinterer Scheibenzwischenraum 15 ist zwischen dem Absorberblech 7 und der hinteren Glasscheibe 3 vorgesehen. Die Scheibenzwischenräume 14, 15 sind jeweils gegenüber der Umgebung gasdicht abgedichtet. Dazu ist insbesondere vorgesehen, dass im Bereich des Y-Profils 6, das eine Halterung für das Absorberblech 7 bildet, zwei Abstandshalter 4, 5 angeordnet sind, die sich jeweils zwischen der vorderen Glasscheibe 2 bzw. hinteren Glasscheibe 3 und dem Y-Profil 6 erstrecken. Die Abstandshalter 4, 5 sind zwischen dem Y-Profil 6 und den Glasscheiben 2, 3 jeweils durch ein primäres Haftmittel 11 fixiert. Das primäre Haftmittel 11 weist vorzugsweise eine auf Butyl basierende Komponente auf. Ferner ist oberhalb der Abstandshalter 4, 5 sowie oberhalb des Y-Profils 6 zwischen der vorderen Glasscheibe 2 und der hinteren Glasscheibe 3 ein sekundäres Haftmittel 12 vorgesehen. Das sekundäre Haftmittel 12 verbindet und fixiert also die vordere Glasscheibe 2, die hintere Glasscheibe 3, das Y-Profil 6 sowie die Abstandshalter 4, 5. Vorzugsweise enthält das sekundäre Haftmittel 12 Silikon.

Im Hinblick auf die Abstandshalter 4, 5 ist vorgesehen, dass diese jeweils ein Hohlprofil aufweisen, in dem ein Trocknungsmittel 13 angeordnet ist. Das Trocknungsmittel 13 kann als Molekularsieb ausgeführt sein bzw. Zeolith umfassen. Die Abstandshalter 4, 5 weisen ferner in einer dem Scheibenzwischenraum 14, 15 zugewandten Wandung Durchbrüche 23 auf, die einen Gasaustausch zwischen den Scheibenzwischenräumen 14, 15 und dem Trocknungsmittel 13 ermöglichen.

Das Absorberblech 7 erstreckt sich vorzugsweise über die gesamte Fläche der Verbundglasscheibe 1 abzüglich der durch die Abstandshalter 4, 5, das Y-Profil 6 und die Haftmittel 11, 12 gebildeten Randbereiche. Das Absorberblech 7 ist zumindest auf einer Seite mit dem Absorberrohr 8 durch die thermische Verbindung 16 gekoppelt. Es ist auch möglich, dass beidseitig des Absorberblechs 7 ein Absorberrohr 8 angeordnet ist. Bevorzugterweise ist, wie in Fig. 3 dargestellt, das Absorberrohr 8 auf einer Seite des Absorberblechs 7, insbesondere der Rückseite 103 des Absorberblechs 7 angeordnet. Das bedeutet, dass das Absorberrohr 8 auf der der Sonneneinstrahlung abgewandten Seite des Absorberblechs 7 angeordnet ist. Auf der der Sonne 37 zugewandten Seite des Absorberblechs ist ferner eine solarselektive Beschichtung 36 vorgesehen. Die solarselektive Beschichtung 36 erhöht den Wirkungsgrad des Absorberblechs 7. Vorteilhafterweise ist auch die Rückseite des Absorberblechs derart ausgebildet, insbesondere mit einer derartigen Beschichtung versehen, dass die Emission von Wärmestrahlung signifikant vermindert ist.

Hinsichtlich der vorderen und hinteren Glasscheibe 2, 3 ist bevorzugtermaßen vorgesehen, dass die hintere Glasscheibe 3 zumindest bereichsweise ein Infrarotstrahlen reflektierendes Medium umfasst. Das Infrarotstrahlen reflektierende Medium kann, wie beispielsweise bei dem Ausführungsbeispiel gemäß Fig. 3 vorgesehen, eine Reflexionsschicht 19 bilden. Die Reflexionsschicht 19 ist auf der Innenseite der hinteren Glasscheibe 3 bzw. der Rückwand 300 angeordnet. Die Reflexionsschicht 19 ist also dem Absorberblech 7 bzw. allgemein dem Absorber 100 zugewandt angeordnet. Die Reflexionsschicht 19 bildet vorzugsweise eine reflektierende Beschichtung der hinteren Glasscheibe 3. Die Reflexionsschicht 19 kann eine Low-E-Beschichtung umfassen. In einer besonders vorteilhaften Ausgestaltung ist die Reflexionsschicht 19 derart reflektierend beschichtet, dass insbesondere bzw. überwiegend Infrarotstrahlung reflektiert wird. Die Reflexionseigenschaften der Reflexionsschicht 19 sind also vorteilhafterweise derart eingestellt, dass eine Reflexion von Wellenlängen im infraroten Bereich bzw. Wärmestrahlungswellenbereich erfolgt, insbesondere hauptsächlich erfolgt. Für andere Wellenlängenbereiche, insbesondere sichtbares Licht, ist die Reflexionsschicht 19 bevorzugtermaßen durchgängig. Die Reflexionsschicht 19 kann sputterbeschichtet, sol-gel-beschichtet oder aluminiumbeschichtet ausgeführt sein. Die bevorzugten Herstellungs- bzw. Beschichtungsverfahren umfassen also Sputtern, Sol-Gelbeschichten oder Aluminiumbeschichten. Dabei wird die Reflexionsschicht 19 vorzugsweise durch Rollenbeschichtungsprozesse, Vorhanggießen, Sprühbeschichtungsprozesse, Siebdruck oder dergleichen Beschichtungsverfahren auf die hintere Glasscheibe 3 aufgebracht.

Die vordere Glasscheibe 2 ist im Gegensatz zur hinteren Glasscheibe 3 vorzugsweise als Solarglasscheibe ausgeführt. Das schließt allerdings nicht aus, dass die vordere Glasscheibe 2 bedarfsweise auch als Isolierglasscheibe bzw. Wärmedämmglas ausgebildet ist. Dabei wird im Rahmen der Anmeldung unter Wärmedämmglas ein Glas verstanden, das ein Infrarotstrahlen reflektierendes Medium, insbesondere die genannte Reflexionsschicht 19, umfasst.

Die als Solarglas ausgebildete vordere Glasscheibe 2 umfasst beidseitig eine Antireflexbeschichtung 17, 18, wobei eine erste Antireflexbeschichtung 17 auf der Außenseite der Verbundglasscheibe 1, also auf der der Sonne 37 zugewandten Seite der vorderen Glasscheibe 2 und die zweite Antireflexbeschichtung 18 auf der hinteren Seite der vorderen Glasscheibe 2, also der dem Absorberblech 7 zugewandten Seite der vorderen Glasscheibe 2, angeordnet ist. Die Antireflexbeschichtungen 17, 18 sind vorzugsweise stoffschlüssig mit der vorderen Glasscheibe 2 verbunden. Die Antireflexbeschichtungen 17, 18 können ferner prismiert sein. Vorzugsweise ist die hintere, zweite Antireflexbeschichtung 18 als Low-E-Beschichtung ausgeführt. Grundsätzlich ist es vorteilhaft, wenn die als Solarglasscheibe ausgebildete vordere Glasscheibe 2 wenigstens eine Antireflexbeschichtung 17, 18 aufweist, die derart eingestellt ist, dass eine möglichst hohe Durchgängigkeit für Lichtwellen, insbesondere Infrarotstrahlen, gegeben ist. Damit wird erreicht, dass ein möglichst hoher Energieeintrag in die Verbundglasscheibe 1 bereitgestellt wird, wobei der in das Innere der Verbundglasscheibe 1 eingeleitete Energiebetrag zumindest teilweise mit Hilfe des Absorberblechs 7 und des Absorberrohrs 8 bzw. allgemein des Absorbers 100 in speicherbare thermische Energie umwandelbar ist.

Um einen möglichst konstanten Wirkungsgrad der Verbundglasscheibe 1 bzw. des Verbundglas-Solarkollektors zu erreichen, ist vorteilhaft vorgesehen, den vorderen Scheibenzwischenraum 14 und den hinteren Scheibenzwischenraum 15 mit einem Schutzgas, insbesondere Argon, zu befüllen. Auf diese Weise wird die Bildung von Kondensation vermieden. Zusätzlich bewirken die Trocknungsmittel 13 eine Reduzierung des Kondensationsrisikos.

Das Absorberblech 7 und das Absorberrohr 8 weisen vorzugsweise ein Material mit einem hohen Wärmeübergangskoeffizienten, insbesondere Kupfer, auf. Die thermische Verbindung 16 umfasst vorzugsweise ein Metall, insbesondere eine Schweißnaht bzw. eine Lötstelle, wobei die Schweißnaht bzw. die Lötstelle durch ein Laserverfahren bzw. Ultraschallverfahren aufgebracht werden kann. Diese mechanische Verbindung zwischen Kupferrohr bzw. Absorberrohr 8 und Kupferblech bzw. Absorberblech 7 ist thermisch wirksam. Das bedeutet, dass die thermische Verbindung 16 zur Übertragung von Wärmeenergie vom Absorberblech 7 zum Absorberrohr 8 beiträgt.

Die vordere Glasscheibe 2 und die hintere Glasscheibe 3 umfassen jeweils vorzugsweise ein Einscheibensicherheitsglas oder ein teilvorgespanntes Glas oder ein Verbundsicherheitsglas.

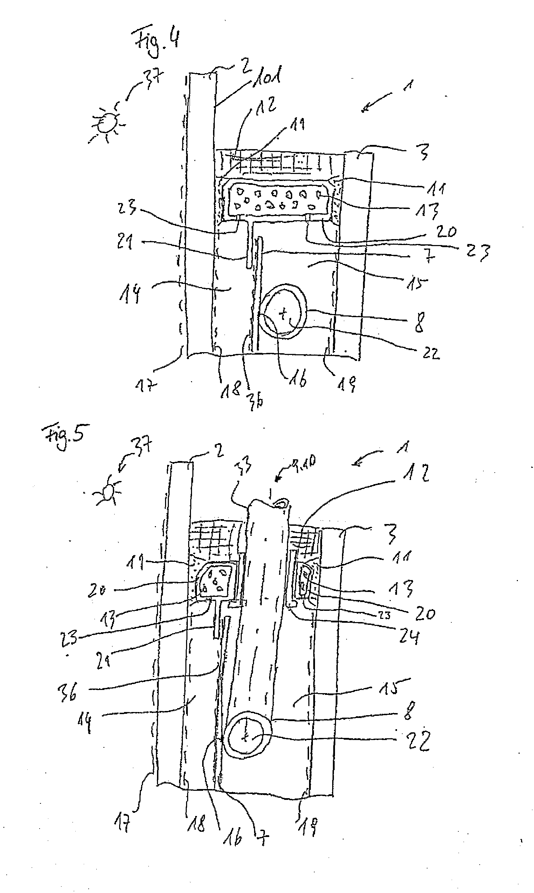

In Fig. 4 ist ein weiteres Ausführungsbeispiel des erfindungsgemäßen Solarkollektors dargestellt, bei dem die vordere Glasscheibe 2 die hintere Glasscheibe 3 überragt und somit eine Stützfläche 101 bildet, mit der die Verbundglasscheibe 1 auf einer Gebäudeseitigen Haltekonstruktion aufgelegt werden kann. Durch die die hintere Glasscheibe 3 überragende vordere Glasscheibe 2 wird also eine Möglichkeit geschaffen, die Verbundglasscheibe 1 bzw. allgemein den Solarkollektor bündig eine Gebäudekonstruktion, beispielsweise eine Pfostenriegelfassade zu integrieren. Dabei bilden die vorderen Glasscheiben 2 mehrerer nebeneinander angeordneter Verbundglasscheiben 1 eine bündige Außenfläche, insbesondere eine durchgehende, im Wesentlichen ebene Glasfassade. Ferner ist bei dem Ausführungsbeispiel gemäß Fig. 4 im Unterschied zu Fig. 3 ein einzelner Abstandshalter bzw. eine einzige Blechauflage 20 vorgesehen, die die Abstandshalter 4, 5 gemäß Fig. 3 ersetzt. Die Blechauflage 20 ist zwischen der vorderen Glasscheibe 2 und der hinteren Glasscheibe 3 angeordnet und durch ein primäres Haftmittel 11 sowie ein sekundäres Haftmittel 12 fixiert, wobei das sekundäre Haftmittel 12 eine zusätzliche, isolierende Verbindung zwischen der vorderen Glasscheibe 2 und der hinteren Glasscheibe 3 bildet. Der Aufbau der Blechauflage 20 entspricht im Wesentlichen dem konstruktiven Aufbau der Abstandshalter 4, 5, wobei zusätzlich eine erste Auflage 21 an der Blechauflage 20 vorgesehen ist, die sich im Wesentlichen rechtwinklig zu einer unteren Wandung der Blechauflage 20 erstreckt und eine Abstützung für das Absorberblech 7 bildet. Das Absorberblech 7 liegt dabei zumindest abschnittsweise, insbesondere mit einem Randbereich, an der ersten Auflage 21 bündig an. Vorzugsweise ist das Absorberblech 7 mit der ersten Auflage 21 fest verbunden, insbesondere verschweißt, vernietet, verschraubt oder verklebt.

In einer weiteren alternativen Ausgestaltung gemäß Fig. 5 ist vorgesehen, basierend auf dem Ausführungsbeispiel gemäß Fig. 4, das Absorberrohr 8 seitlich, d.h. in einer parallelen Ebene zu der vorderen Glasscheibe 2 und der hinteren Glasscheibe 3, aus der Verbundglasscheibe 1 bzw. dem Solarkollektor herauszuführen. Dazu ist vorgesehen, im Randbereich der Verbundglasscheibe 1 eine Durchführung 24 vorzusehen, die die Blechauflage 20 durchgreift. Die Durchführung 24 bildet vorzugsweise eine Hülse, die thermisch isolierend in einer Ausnehmung der Blechauflage 20 angeordnet ist. Vorzugsweise weist die Hülse bzw. die Durchführung 24 zumindest an einem axialen Ende einen Ringflansch auf, der an einer unteren Wandung der Blechauflage 20 anliegt und ein Herausrutschen der Durchführung 24 aus der Blechauflage 20 verhindert. In der Durchführung 24 ist das Absorberrohr 8 angeordnet, wobei das Absorberrohr 8 aus der Verbundglasscheibe 1 geführt ist. Das Absorberrohr 8 ist ferner von dem sekundären Haftmittel 12 umgeben, wobei das sekundäre Haftmittel 12 eine zusätzliche Abdichtung des Absorberrohrs 8 bewirkt. Das aus der Verbundglasscheibe 1 herausgeführte Teilstück des Absorberrohrs 8 bildet somit eine Zuleitung 9 bzw. Ableitung 10 für das Wärmetauschermedium 22. Dazu ist vorteilhafterweise an den außerhalb der Verbundglasscheibe 1 angeordneten Rohrenden ein Anschluss 33 vorgesehen, so dass das Absorberrohr 8 bzw. die Zuleitung 9 oder Ableitung 10 beispielsweise mit einem Gebäudeheizsystem verbindbar ist.

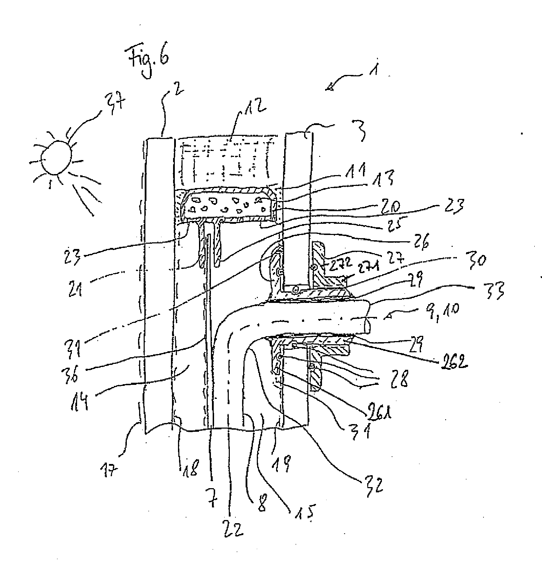

Das Ausführungsbeispiel gemäß Fig. 6 unterscheidet sich im Wesentlichen dadurch von dem Ausführungsbeispiel gemäß Fig. 5, dass die Zuleitung 9 bzw. Ableitung 10 des Absorberrohrs 8 nicht durch eine Seitenfläche der Verbundglasscheibe 1 geführt ist, sondern durch die hintere Glasscheibe 3 bzw. Rückwand 300. Dabei weist die hintere Glasscheibe 3 eine Öffnung, insbesondere Bohrung, auf, in der ein innerer Flansch 26 angeordnet ist. Der innere Flansch 26 umfasst einen Ringscheibenabschnitt 261, an den sich im Wesentlichen in einem rechten Winkel ein Hülsenabschnitt 262 anschließt. Der Hülsenabschnitt 262 durchgreift die hintere Glasscheibe 3. Der Ringscheibenabschnitt 261 ist hingegen auf der Innenseite bzw. vorderen Oberfläche der hinteren Glasscheibe 3 angeordnet. Insbesondere ist der Ringscheibenabschnitt 261 auf der der Sonne 37 zugewandten Seite der hinteren Glasscheibe 3, insbesondere auf der mit der Reflexionsschicht 19 versehenen Oberfläche der hinteren Glasscheibe 3 angeordnet. Der innere Flansch 26 umfasst auf den der hinteren Glasscheibe 3 zugewandten Oberflächen jeweils ringförmige Ausnehmungen bzw. Ringnuten, in denen Dichtungsmittel, insbesondere ringförmige Dichtungsmittel bzw. O-Ringe 28, angeordnet sind. Die O-Ringe 28 dichten den inneren Flansch 26 gegen die hintere Glasscheibe 3 ab. Außerhalb der Verbundglasscheibe 1, insbesondere auf einer der Sonne 37 abgewandten Seite der hinteren Glasscheibe 3, ist ein äußerer Flansch 27 angeordnet, der im Wesentlichen rotationssymmetrisch ausgebildet ist und ein L-förmiges Profil umfasst. Das L-förmige Profil des äußeren Flanschs 27 weist eine hülsenförmige Basis 271 auf, die den inneren Flansch 26, insbesondere den Hülsenabschnitt 262, ringförmig umgibt. In einem im Wesentlichen rechten Winkel zur hülsenförmigen Basis 271 ist eine Dichtungsscheibe 272 angeordnet, die mit der hülsenförmigen Basis 271 einstückig ausgebildet ist. Die Dichtungsscheibe 272 umfasst eine Ringnut bzw. ringförmige Ausnehmung, in der analog zum inneren Flansch 26 ein Dichtungsmittel bzw. O-Ring 28 angeordnet ist, der die Dichtungsscheibe 272 gegen die hintere Glasscheibe 3 abdichtet.

Das das Wärmetauschermedium 22 führende Absorberrohr 8 weist einen Winkel 32 auf, der im Wesentlichen auf Höhe des inneren Flanschs 26 angeordnet ist. Durch den Winkel 32 wird das Absorberrohr 8 zum inneren Flansch 26 geführt, wobei das Absorberrohr 8 den inneren Flansch 26, insbesondere den Hülsenabschnitt 262 axial durchläuft. Das Absorberrohr 8 ist mit dem inneren Flansch 26, insbesondere dem Hülsenabschnitt 262 fest verbunden. Die Verbindung erfolgt vorzugsweise durch eine Lötung 29 bzw. eine Schweißnaht.

Die hülsenförmige Basis 271 umfasst auf einer Innenumfangsfläche vorzugsweise ein Gewinde 30, das in ein entsprechendes Gegengewinde 30' des inneren Flanschs 26 eingreift. Das Gegengewinde 30' ist dabei vorzugsweise im Hülsenabschnitt 262 des inneren Flanschs 26 angeordnet. Mit Hilfe des Gewindes 30 ist es möglich, den inneren Flansch 26 gegen den äußeren Flansch 27 zu verspannen, so dass die in dem Ringscheibenabschnitt des inneren Flanschs 26 und der Dichtungsscheibe 272 des äußeren Flanschs 27 angeordneten O-Ringe 28 abdichtend gegen die hintere Glasscheibe 3 wirksam werden.

Das Rohrende des Absorberrohrs 8, das der Sonne 37 abgewandt außerhalb der Verbundglasscheibe 1 angeordnet ist, umfasst einen Anschluss 33 zur Verbindung mit einem Gebäudeheizsystem. Der Anschluss 33 kann ein Gewinde, einen Schnellverschluss oder dergleichen Anschlussmittel umfassen.

Der innere Flansch 26 ist vorzugsweise durch ein temperaturbeständiges Haftmittel 31 mit der hinteren Glasscheibe 3 verbunden bzw. an der hinteren Glasscheibe 3 durch das temperaturbeständige Haftmittel 31 fixiert. Das temperaturbeständige Haftmittel 31 kann ein Polymer bzw. eine Polymerverbindung umfassen.

Hinsichtlich der Blechauflage 20 ist bei dem Ausführungsbeispiel gemäß Fig. 6 eine im Bezug auf das Ausführungsbeispiel gemäß Fig. 4 unterschiedliche Weiterentwicklung vorgesehen. Insbesondere weist die Blechauflage 20 gemäß Fig. 6, wie auch gemäß Fig. 4, eine erste Auflage 21 auf, an der sich das Absorberblech 7 abstützt. Zusätzlich ist jedoch in dem Ausführungsbeispiel gemäß Fig. 6 vorgesehen, eine zweite Auflage 25 parallel zur ersten Auflage 21 anzuordnen, so dass zwischen der ersten Auflage 21 und der zweiten Auflage 25 eine Einfassung gebildet ist, in der das Absorberblech 7 aufgenommen und gehalten ist.

In diesem Zusammenhang wird darauf hingewiesen, dass auch andere Ausführungsformen der Blechauflage 20 bzw. der Abstandshalter 4, 5 mit der rückseitigen Durchführung des Absorberrohrs 8 durch die hintere Glasscheibe 3 kombinierbar sind. Dasselbe gilt im Wesentlichen auch für die weiteren, in der Anmeldung genannten Ausführungsbeispiele, die jede Kombinationsmöglichkeit zwischen Abstandshaltern 4, 5 bzw. Blechauflage 20 und Absorberrohrdurchführung bzw. Anordnung der Zuleitung 9 und/oder Ableitung 10 zulassen und umfassen.

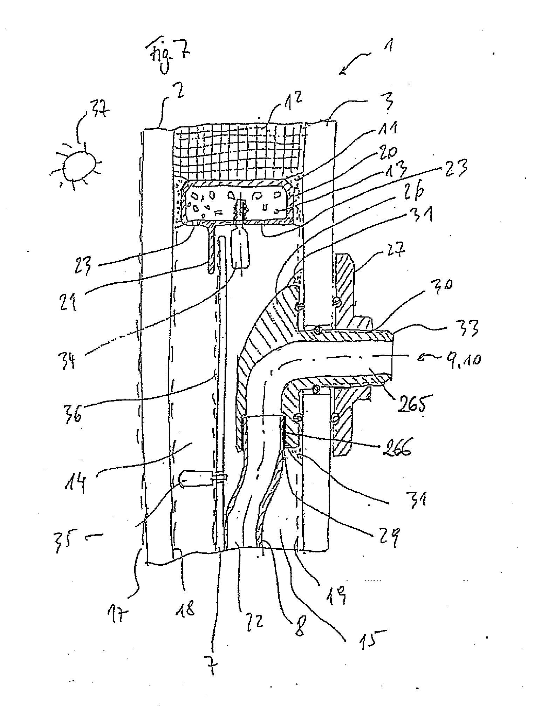

In Fig. 7 ist ein weiteres Ausführungsbeispiel des erfindungsgemäßen Solarkollektors bzw. der Verbundglasscheibe 1 dargestellt, wobei sich gegenüber dem Ausführungsbeispiel gemäß Fig. 6 insbesondere die Konstruktion der Absorberrohrdurchführung durch die hintere Glasscheibe 3 unterscheidet. Insbesondere ist gemäß Fig. 7 vorgesehen, den inneren Flansch 26 als Anschlussstück bzw. als Zuleitung 9 bzw. Ableitung 10 auszuführen. Der innere Flansch 26 gemäß Fig. 7 weist eine Durchgangsleitung 265 auf, die im Inneren der Verbundglasscheibe 1 abgewinkelt ist und an einem im Inneren der Verbundglasscheibe 1 angeordneten Ende ein Koppelstück 266 bildet. Das Koppelstück 266 umfasst im Wesentlichen einen größeren Querschnittsdurchmesser als die Durchgangsleitung 265. In das Koppelstück 266 mündet das Rohrende des Absorberrohrs 8. Das Absorberrohr 8 ist dabei vorzugsweise mit dem Koppelstück 266 verschweißt oder verlötet. Insbesondere ist zwischen dem Koppelstück 266 und dem Absorberrohrende die Lötung 29 angeordnet. Der innere Flansch 26 ist mit dem temperaturbeständigen Haftmittel 31 an der hinteren Glasscheibe 3 befestigt. Ferner ist der Ringscheibenabschnitt 261 oberhalb der Krümmung der Durchgangsleitung 265 auslaufend ausgebildet. Insbesondere bildet der Ringscheibenabschnitt 261 des inneren Flanschs 26 oberhalb der Krümmung der Durchgangsleitung 265 ein haifischflossenartiges Profil. Die Verbindung zwischen dem äußeren Flansch 27 und dem inneren Flansch 26 ist gemäß dem Ausführungsbeispiel nach Fig. 6 ausgebildet.

Ferner ist bei dem Ausführungsbeispiel gemäß Fig. 7 vorgesehen, anstelle der zweiten Auflage 25, wie bei Fig. 6 ersichtlich, ein lösbar mit der Blechauflage 20 verbundenes bzw. verbindbares Fixierelement 34 vorzusehen. Das Fixierelement 34 ist vorzugsweise mit einer unteren Wandung der Blechauflage 20 schraubverbunden bzw. schraubverbindbar. Das Fixierelement 34 ermöglicht somit eine einfache Montage, insbesondere einen einfachen Austausch des Absorberblechs 7, das zwischen der ersten Auflage 21 und dem Fixierelement 34 gehalten ist.

Des Weiteren ist ein Abstandshalteelement 35 vorgesehen, das mit dem Absorberblech 7 lösbar verbunden ist. Das Abstandshalteelement 35 ist im Wesentlichen stiftartig ausgebildet und erstreckt sich senkrecht zum Absorberblech 7. Das Abstandshalteelement 35 ist dabei zwischen der vorderen Glasscheibe 2 und dem Absorberblech 7 angeordnet und gewährleistet einen konstanten Abstand zwischen der vorderen Glasscheibe 2 und dem Absorberblech 7. Das Abstandshalteelement 35 ist vorzugsweise mit dem Absorberblech 7 verschraubt. Das bedeutet, dass das Absorberblech 7 eine Gewindebohrung umfasst, in der ein Gewindefortsatz des Abstandshalteelements 35 angeordnet ist.

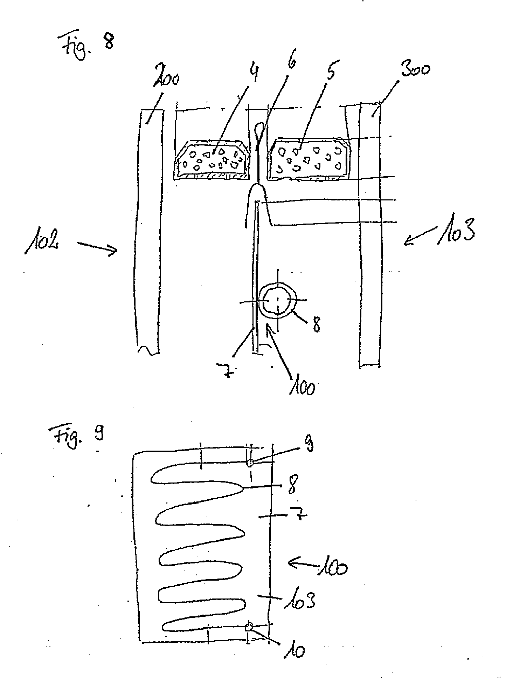

Fig. 8 zeigt anschaulich den grundlegenden Aufbau eines Verbundglas-Solarkollektors gemäß einem bevorzugten Ausführungsbeispiel der vorliegenden Erfindung. Demnach umfasst der Solarkollektor gemäß dem Ausführungsbeispiel nach Fig. 8 einen Absorber 100, der vorzugsweise als Kombination eines Absorberblechs 7 mit einem Absorberrohr 8 ausgeführt ist. Dem Absorber 100 ist eine Vorderseite 102 und eine Rückseite 103 zugeordnet, wobei auf der Vorderseite 102 des Absorbers 100 eine Abdeckung 200 beabstandet zum Absorber 100 angeordnet ist. Auf der Rückseite 103 des Absorbers 100 ist eine Rückwand 300 vorgesehen, die zum Absorber 100 einen Abstand aufweist. Die Rückwand 300 ist als Wärmedämmglas bzw. Isolierglas ausgeführt. Das bedeutet, dass die Rückwand 300 ein Infrarotstrahlen reflektierendes Medium, insbesondere eine Infrarotstrahlen reflektierende Beschichtung, umfasst. Ferner sind Abstandshalter 4, 5 vorgesehen, die zwischen der Abdeckung 200 und dem Absorber 100 sowie der Rückwand 300 und dem Absorber 100 einen abgedichteten Hohlraum, insbesondere Scheibenzwischenraum 14, 15, bereitstellen. Der Absorber 100, insbesondere das Absorberblech 7, ist durch ein Y-Profil 6 im Zwischenraum zwischen der Rückwand 300 und der Abdeckung 200 fixiert.

In Fig. 9 ist verdeutlicht, wie der Absorber 100 vorzugsweise konstruktiv ausgeführt ist. Der Absorber 100 umfasst gemäß Fig. 9 ein Absorberblech 7, das mit einem Absorberrohr 8 verbunden ist, wobei sich das Absorberrohr 8 über die Rückseite 103 des Absorberblechs 7 mäanderförmig erstreckt. Dabei können die Abstände zwischen den mäanderförmigen Windungen variieren. Vorzugsweise erhöhen sich die Abstände zwischen den Windungen von einem unteren Ende zu einem oberen Ende des Absorbers 100.

Speziell bei der Integration des Verbundglas-Solarkollektors in eine Gebäudefassade hat sich gezeigt, dass die Temperaturen im oberen Bereich des Absorbers 100 höher als im unteren Bereich sind. Dieser Effekt kann zur Wirkungsgradsteigerung des Solarkollektors genutzt werden, indem die mäanderförmigen Windungen des Absorberrohrs 8 im oberen Bereich des Absorbers 100 zueinander einen kleineren Abstand als im unteren Bereich aufweisen. Beispielsweise variiert der Abstand zwischen benachbarten Windungen des Absorberrohrs 8 von höchstens 5 cm im oberen Bereich bis höchstens 15 cm, insbesondere höchstens 10 cm, im unteren Bereich.

Das Absorberrohr 8 weist zwei Rohrenden auf, wobei ein oberes bzw. erstes Rohrende als Zuleitung 9 und ein zweites bzw. unteres Rohrende als Ableitung 10 ausgebildet ist. Die Zuleitung 9 und die Ableitung 10 sind vorzugsweise in einem rechten Winkel zum Absorberblech 7 angeordnet. Wenn der Absorber 100 gemäß Fig. 9 Teil eines Verbundglas-Solarkollektors ist, sind die Zuleitung 9 und die Ableitung 10 vorzugsweise in einem rechten Winkel zum Absorberblech 7 durch die Rückwand 300 geführt. Vorzugsweise wird im Betrieb des Solarkollektors durch die Zuleitung 9 das Wärmetauschermedium 22 in das Absorberrohr 8 eingeleitet und durch die Ableitung 10 aus dem Absorberrohr ausgeleitet. Das Wärmetauschermedium 22 durchströmt also das Absorberrohr 8 ausgehend von der Zuleitung 9 hin zur Ableitung 10.

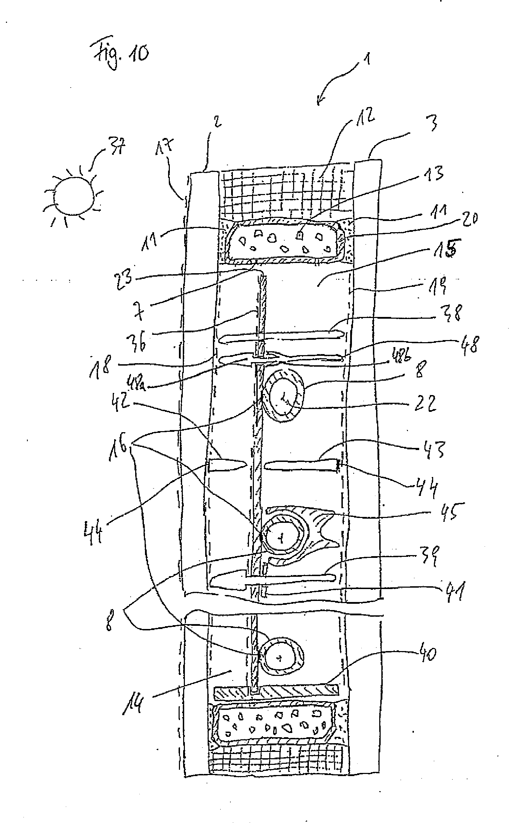

In Fig. 10 sind unterschiedliche Ausführungsformen des Abstandshalteelements in Anordnung mit der Verbundglasscheibe 1 dargestellt. Es ist vorauszuschicken, dass die in Fig. 10 dargestellten Abstandshalteelemente 35, 38, 39, 40, 42, 43, 45, 48 nicht nur in Kombination miteinander, sondern auch separat in dem Solarkollektor Anwendung finden und somit jede Kombination eines der dargestellten Abstandshalteelemente 35, 38, 39, 40, 42, 43, 45, 48 mit der Verbundglasscheibe 1 bzw. dem Solarkollektor offenbart und beansprucht wird.

Das erste Abstandshalteelement 38 ist stiftartig ausgebildet und durchgreift den vorderen Scheibenzwischenraum 14, das Absorberblech 7 und den hinteren Scheibenzwischenraum 15. Das erste Abstandshalteelement 38 erstreckt sich somit von der vorderen Glasscheibe 2 bis zur hinteren Glasscheibe 3. Vorzugsweise ist das erste Abstandshalteelement 38 mit dem Absorberblech 7 lösbar verbunden, insbesondere schraubverbunden. Eine andere Verbindung, insbesondere feste Verbindung, ist möglich.

Eine Weiterbildung des ersten Abstandshalteelements 38 ist mit dem zweiten Abstandshalteelement 48 verwirklicht. Das zweite Abstandshalteelement 48 ist im Wesentlichen stiftartig ausgebildet und umfasst ferner Positionierhilfen 48a, 48b. Dabei ist eine vordere Positionierhilfe 48a konusförmig ausgebildet, wobei die Konusbasis im Bereich des Absorberblechs 7 angeordnet ist. Eine hintere Positionierhilfe 48b, die an der Rückseite 103 des Absorberblechs angeordnet ist, ist flügelartig ausgebildet, wobei die Flügel der hinteren Positionierhilfe 48b flexibel sind. Die hintere Positionierhilfe 48b bildet somit eine Art Schnappverschluss bzw. Widerhaken. Auf diese Weise kann das zweite Abstandshalteelement 48 durch eine Bohrung im Absorberblech 7 geführt werden, wobei sich das zweite Abstandshalteelement 48 selbsttätig fixiert, sobald die hintere Positionierhilfe 48b durch das Absorberblech 7 hindurchgeführt ist.

Ein drittes Abstandhalteelement 42 ist stiftartig ausgebildet, wobei sich das dritte Abstandshalteelement 42 von der Rückwand 300 bzw. der hinteren Glasscheibe 3 bis zum Absorberblech 7 erstreckt. Das dritte Abstandshalteelement 42 ist mit der hinteren Glasscheibe 3 durch eine Klebestelle 44 verbunden bzw. mit der hinteren Glasscheibe 3 verklebt. Das dritte Abstandshalteelement 42 bildet somit ein hinteres Abstandshalteelement. Dem hinteren Abstandshalteelement bzw. dem dritten Abstandshalteelement 42 ist ein viertes, vorderes Abstandshalteelement 43 zugeordnet, das korrespondierend zum dritten Abstandshalteelement 42 mit der vorderen Glasscheibe 2 verklebt ist und sich stiftartig zum Absorberblech 7 erstreckt. Dazu ist zwischen der vorderen Glasscheibe 2 und dem vorderen, vierten Abstandshalteelement 43 eine Klebestelle 44 vorgesehen. Das Absorberblech 7 ist somit zwischen dem dritten und dem vierten Abstandshalteelement 42, 43 gehalten.

Es ist ebenfalls möglich, ein Abstandshalteelement vorzusehen, das mit dem Absorberrohr 8 steckverbindbar ist. Ein derartiges Abstandshalteelement zeigt das fünfte Abstandshalteelement 45. Das fünfte Abstandshalteelement 45 weist ein vorderes, C-förmiges Profil auf, das zum Zwecke einer Steckverbindung das Absorberrohr 8 umgreift. Das fünfte Abstandshalteelement 45 ist ferner auf der Rückseite 103 des Absorberblechs 7 angeordnet und umfasst zwei sich in Richtung der hinteren Glasscheibe 3 erstreckende Spitzen, die vorzugsweise die hintere Glasscheibe 3 berühren und den Absorber 100 bzw. das Absorberblech 7 und das Absorberrohr 8 gegen die hintere Glasscheibe 3 abstützen. Eine andere Anzahl von sich in Richtung der hinteren Glasscheibe 3 erstreckenden Spitzen ist möglich.

Ein sechstes Abstandshalteelement 39 weist eine im Wesentlichen stiftartige Form auf, wobei das sechste Abstandshalteelement 39 im vorderen Scheibenzwischenraum 14 eine der vorderen Positionierhilfe 48a des zweiten Abstandshalteelements 48 entsprechende Form bildet. Im Unterschied zu dem zweiten Abstandshalteelement 48 weist das sechste Abstandshalteelement 39 auf der Rückseite 103 des Absorberblechs 7 bzw. auf der der hinteren Glasscheibe 3 zugewandten Seite des Absorberblechs 7 eine Sicherungsscheibe 41 auf. Die Sicherungsscheibe 41 kann mit dem stiftartigen sechsten Abstandshalteelement 39 verschraubt sein. Die Sicherungsscheibe 41 bildet mit dem vorderen, konusförmigen Abschnitt des sechsten Abstandshalteelements 39 eine Klemmfixierung für das Absorberblech 7.

Ein siebtes Abstandshalteelement 40 ist profilartig ausgebildet und im Bereich der Blechauflage 20 angeordnet. Insbesondere ist das Abstandshalteelement 40 mit der Blechauflage 20 verbunden und weist auf der dem Absorberblech 7 zugewandten Seite eine Nut auf, in die das Absorberblech 7 eingreift. Im Unterschied zu den übrigen Abstandshalteelementen ist es bei dem siebten Abstandshalteelement 40 daher nicht erforderlich, dass das siebte Abstandshalteelement 40 einen Kontakt zur vorderen Glasscheibe 2 oder der hinteren Glasscheibe 3 bildet. In diesem Zusammenhang wird darauf hingewiesen, dass das siebte Abstandshalteelement 40 durch die Blechauflage 20 selbst gebildet sein kann, indem die dem Absorberblech 7 zugewandte Wandung der Blechauflage 20 eine entsprechende Nut zur Aufnahme des Absorberblechs 7 aufweist.

Es wird darauf hingewiesen, dass jedes der genannten Abstandshalteelemente 35, 38, 39, 40, 42, 43, 45, 48 für sich genommen einzeln oder in mehrfacher Anordnung in einem Solarkollektor angeordnet sein kann. Es ist ebenfalls möglich, dass die genannten Abstandshalteelemente 35, 38, 39, 40, 42, 43, 45, 48 in mehrfachen Kombinationen miteinander in einem Solarkollektor zum Einsatz kommen. Beispielsweise können mehrere erste Abstandshalteelemente 38 in einem Verbundglas-Solarkollektor vorgesehen sein. Alternativ oder zusätzlich können mehrere zweite Abstandshalteelemente 48, dritte Abstandshalteelemente 42, vierte Abstandshalteelemente 43, fünfte Abstandshalteelemente 45, sechste Abstandshalteelemente 39 oder siebte Abstandshalteelemente 40 vorgesehen sein. Bevorzugt ist es, mehrere, gleichartige Abstandshalteelemente 35, 38, 39, 40, 42, 43, 45, 48 vorzusehen.

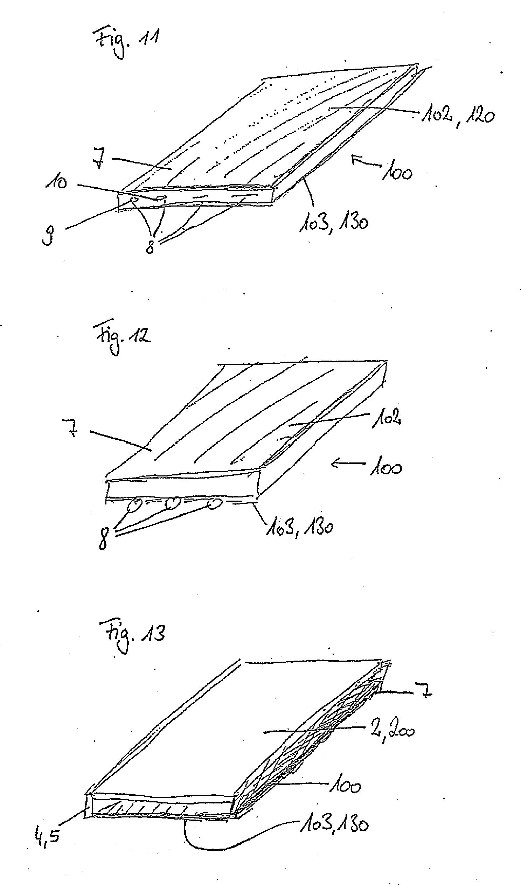

Die Figuren 11 und 12 zeigen in perspektivischer Darstellung zwei weitere, alternative Ausführungsbeispiele des erfindungsgemäßen Absorbers 100. Der Absorber 100 umfasst im Allgemeinen ein Absorberblech 7 und ein Absorberrohr 8. Bei dem Ausführungsbeispiel gemäß Fig. 11 ist das Absorberrohr 8 in das Absorberblech 7 integriert. Das bedeutet, dass das Absorberblech 7 mit einem Fluidkanal durchsetzt ist bzw. in dem Absorberblech 7 ein Fluidkanal integriert ist, der wenigstens zwei Austrittsöffnungen umfasst, die die Zuleitung 9 bzw. Ableitung 10 bilden. Der Absorber 100 bzw. das integrierte Absorberblech 7 umfasst eine Vorderseite 102 und eine Rückseite 103. Die Rückseite 103 weist eine Infrarotstrahlen reflektierende Beschichtung 130 auf. Die reflektierende Beschichtung 130 ist dabei derart angepasst, dass die Reflexion in Richtung des Absorberrohrs 8 bzw. des Fluidkanals wirksam ist. Das bedeutet, dass von dem Absorberrohr 8 bzw. dem Fluidkanal abgestrahlte Wärmeenergie bzw. Infrarotstrahlung durch die reflektierende Beschichtung 130 reflektiert wird. Die reflektierende Beschichtung 130 kann ferner derart angepasst sein, dass Infrarotstrahlung von außerhalb, also aus der Umgebung auf die Rückseite 103 treffende Infrarotstrahlung, zumindest teilweise, insbesondere größtenteils, absorbiert oder transmittiert wird. Bei dem Ausführungsbeispiel gemäß Fig. 11 ist ferner vorgesehen, dass die Vorderseite 102 eine absorbierende Beschichtung 120 umfasst. Die absorbierende Beschichtung 120 ist für den Wellenbereich der Infrarotstrahlung absorbierend eingestellt, so dass der Absorber 100 bzw. das Absorberblech 7 eine hohe Wärmeaufnahmefähigkeit aufweist.

Die Beschichtungen der Vorderseite 102 und der Rückseite 103, insbesondere die reflektierende Beschichtung 130, umfasst vorzugsweise eine Low-E-Beschichtung. Die Beschichtung kann eine Sputterschicht umfassend TiOₓN_{y} umfassen. Derartige Schichten können zusätzlich eine SiO₂-Komponent aufweisen. Im Allgemeinen umfasst die reflektive Beschichtung 130 eine hochsolarselektive Schicht. Die Beschichtung kann beispielsweise durch ein Sol-Gel-Verfahren aufgebracht werden. Vorzugsweise wird die Beschichtung in einem Sol-Gel-Prozess aufgebracht, wobei die Beschichtung eine Low-E-Optimierung aufweist und beispielsweise Materialien wie TiO₂ und ZnO oder TiO₂ und SiO₂ oder dergleichen umfasst. Alternativ kann die Beschichtung TEOS/AL₂O₃ und/oder SiO₂ umfassen.

Der Absorber 100 gemäß Fig. 12 unterscheidet sich von dem Absorber gemäß Fig. 11 dadurch, dass das Absorberrohr 8 an der Rückseite 103 des Absorberblechs 7 angeordnet ist. Das Absorberrohr 8 ist dabei vorzugsweise mit dem Absorberblech 7 verschweißt bzw. durch eine thermische Verbindung 16 mit dem Absorberblech 7 gekoppelt, wie bereits im Zusammenhang mit den Figuren 3 und 9 beschrieben. Der Absorber 100 gemäß Fig. 12 weist ferner eine reflektierende Beschichtung 130 auf, die sich über die Rückseite 103 des Absorberblechs 7 erstreckt. Die reflektierende Beschichtung 130 kann dabei auch das Absorberrohr 8 umfassen. Das bedeutet, dass auch die der Sonneneinstrahlung abgewandten Seiten des Absorberrohrs 8 mit der reflektierenden Beschichtung 130 versehen sein können.

Die Vorderseite des Absorbers 100 kann, wie auch gemäß Fig. 11 vorgesehen, eine Infrarotstrahlen absorbierende Beschichtung 120 aufweisen. Es wird darauf hingewiesen, dass die absorbierende Beschichtung 120 und die reflektierende Beschichtung 130 dasselbe Material aufweisen können. Der Absorber 100 bzw. das Absorberblech 7 kann also beidseitig mit demselben Beschichtungsmaterial beschichtet sein, wobei das Beschichtungsmaterial auf der Vorderseite 102 insbesondere absorbierend und auf der Rückseite 103 insbesondere reflektierend bzw. wärmedämmend wirkt. Die beidseitige Beschichtung kann vorzugsweise eine Low-E-Beschichtung umfassen. Es ist möglich, die beidseitige Beschichtung durch ein Tauchverfahren auf den Absorber 100 aufzubringen. Auf diese Weise ist eine simultane Beschichtung der Vorderseite 102 und der Rückseite 103 möglich. Die Herstellung des Absorbers 100 wird somit beschleunigt.

Alternativ können die absorbierende Beschichtung 120 auf der Vorderseite 102 und die reflektierende Beschichtung 130 auf der Rückseite 103 unterschiedliche Schichtsysteme umfassen. Die unterschiedlichen Schichtsysteme bzw. Beschichtungsmaterialien können beispielsweise durch eine Sprühbeschichtung auf dem Absorber 100 bzw. das Absorberblech 7 aufgebracht werden.

Im Allgemeinen ist es vorteilhaft, wenn die jeweiligen Beschichtungsmaterialien, die auch identisch sein können, derart gewählt werden, dass die weiteren Behandlungsschritte im Herstellungsprozess für beide Beschichtungen bzw. die beidseitigen Beschichtungen simultan ausgeführt werden können. Eine derartige Weiterbehandlung kann beispielsweise eine Temperaturbehandlung oder eine Bestrahlung bzw. Beleuchtung der Beschichtung umfassen. Beispielsweise werden die Schichtmaterialien für die absorbierende Beschichtung 120 und die reflektierende Beschichtung 130 jeweils derart gewählt, dass sowohl die absorbierende Beschichtung 120, als auch die reflektierende Beschichtung 130 in einem gemeinsamen Weiterbehandlungsprozess, beispielsweise einem Wärmebehandlungsverfahren oder einer Bestrahlung mit ultraviolettem Licht, unterzogen werden können.

Fig. 13 zeigt ein bevorzugtes Ausführungsbeispiel eines Solarkollektoraufbaus mit einem Absorber 100 gemäß Fig. 11. Bei dem Solarkollektoraufbau ist der Absorber 100 bzw. das Absorberblech 7 mit integrierten Fluidkanälen bzw. dem integrierten Absorberrohr 8 durch Abstandshalter 4, 5 mit einer vorderen Glasscheibe 2 gekoppelt. Die vordere Glasscheibe 2 bildet damit die Abdeckung 200 des Solarkollektors. Der Aufbau gemäß Fig. 13 entspricht im Wesentlichen einem Verbundglasaufbau, wobei die hintere Glasscheibe 3 durch das Absorberelement 100 ersetzt ist. Dabei weist die Rückseite 103 des Absorbers 100 bzw. des Absorberblechs 7 die Infrarotstrahlen reflektierende Beschichtung 130 auf.

Das Ausführungsbeispiel gemäß Fig. 13 kann um eine weitere, hintere Glasscheibe 3 erweitert sein, die eine zusätzliche Infrarotstrahlen reflektierende Beschichtung umfasst bzw. als Wärmedämmglas ausgeführt ist. Zur Erzielung der hier angestrebten höheren Wirkung ist es also möglich, einen Isolierglasverbund bzw. eine Verbundscheibe vorzusehen, die eine vordere Glasscheibe 2, eine hintere Glasscheibe 3 und einen dazwischen angeordneten Absorber 100 umfasst, wobei auf der der Sonneneinstrahlung abgewandten Seite des Absorbers 100 das Infrarotstrahlen reflektierende Medium, insbesondere die Infrarotstrahlen reflektierende Beschichtung 130 vorgesehen ist. Die Infrarotstrahlen reflektierende Beschichtung 130 kann dabei sowohl auf der Rückseite 103 des Absorbers 100, als auch auf einer Oberfläche der hinteren Glasscheibe 3 angeordnet sein. Es ist auch möglich, dass zwischen dem Absorber 100 und der hinteren Glasscheibe 3, also im hinteren Scheibenzwischenraum 15 ein Infrarotstrahlen reflektierendes Medium, insbesondere eine Glaskugelschüttung, vorgesehen ist. Die Anordnung und Verwendung der genannten Infrarotstrahlen reflektierenden Medien kann sowohl einzeln, als auch in Kombination erfolgen. Das bedeutet, dass beispielsweise die Rückseite 103 des Absorberblechs 7 oder die hintere Glasscheibe 3 oder die Rückseite 103 des Absorberblechs 7 und die hintere Glasscheibe 3 eine Infrarotstrahlen reflektierende Beschichtung 130 bzw. allgemein ein Infrarotstrahlen reflektierendes Medium umfassen kann.

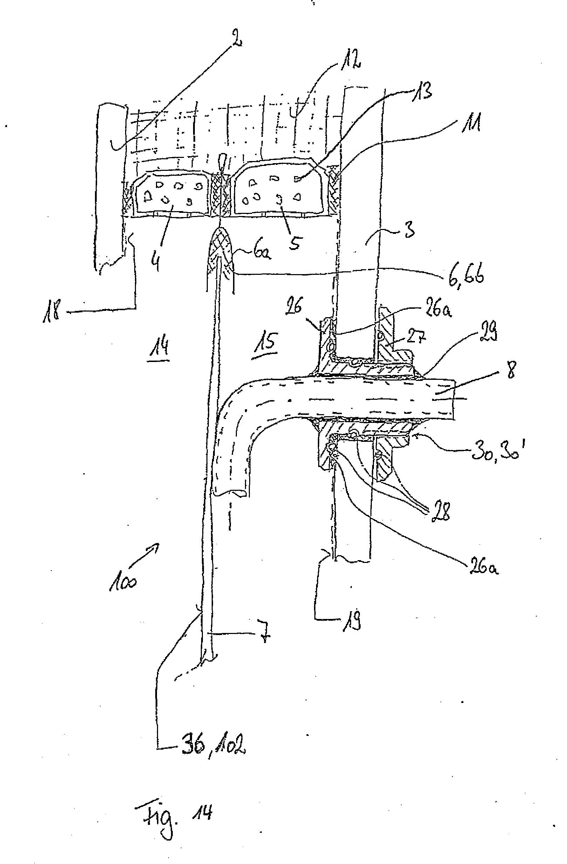

In Fig. 14 ist eine Kombination der Ausführungsbeispiele gemäß Figuren 3 und 6 dargestellt. Der Aufbau des Verbundglas-Solarkollektors entspricht im Wesentlichen dem Aufbau gemäß Fig. 3, wobei in Fig. 14 dargestellt ist, wie das Absorberrohr 8 aus dem Verbundglas-Solarkollektor geführt ist. Das Herausführen des Absorberrohrs 8 aus dem Verbundglas-Solarkollektor erfolgt dabei analog zu dem Ausführungsbeispiel gemäß Fig. 6.

Im Folgenden werden beispielhaft anhand der Darstellung gemäß Fig. 14 mögliche Materialien für die einzelnen Komponenten des Verbundglas-Solarkollektors erläutert.

Der Verbundglas-Solarkollektor umfasst eine vordere Glasscheibe 2, die vorzugsweise ein Einscheibensicherheitsglas, insbesondere Weißglas-Einscheibensicherheitsglas, umfasst. Die vordere Glasscheibe 2 kann eine Wandstärke von wenigstens 2 mm, insbesondere höchstens 5 mm, insbesondere eine Stärke von 4 mm, aufweisen. Die hintere Glasscheibe 3 ist vorzugsweise als Floatglas, insbesondere als Floatglas-Einscheibensicherheitsglas, ausgeführt. Die hintere Glasscheibe 3 kann dieselben Dimensionen wie die vordere Glasscheibe 2 aufweisen. Insbesondere weist die hintere Glasscheibe eine Wandstärke von 4 mm auf. Die vordere Glasscheibe 2 und die hintere Glasscheibe 3 sind durch das sekundäre Haftmittel 12 verbunden. Unterhalb des sekundären Haftmittels 12 sind die Abstandshalter 4, 5 angeordnet, die jeweils durch das primäre Haftmittel 11 untereinander bzw. mit der vorderen Glasscheibe 2 und der hinteren Glasscheibe 3 verbunden sind. Das primäre Haftmittel 11 und das sekundäre Haftmittel 12 sind vorzugsweise jeweils als Dichtmittel bzw. als Dichtungen ausgebildet. Die Abstandshalter 4, 5 umfassen jeweils ein Hohlprofil, in dem ein Trocknungsmittel 13 angeordnet ist. Das Trocknungsmittel 13 beinhaltet vorzugsweise ein Molekularsieb.

Zwischen den Abstandshaltern 4, 5 ist ferner ein Y-Profil 6 angeordnet, das ein Halteelement für das Absorberblech 7 bildet. In der Y-Gabelung umfasst das Y-Profil vorzugsweise eine Haltewandung 6a, die V-förmig bzw. U-förmig ausgebildet ist. Das U-förmige bzw. schienenartige Profil der Haltewandung 6a kann ein Polykarbonat aufweisen. Innerhalb der Haltewandung 6a ist eine Füllung 6b angeordnet, die vorzugsweise Silikon umfasst. In der Füllung 6b ist das Absorberblech 7 bzw. allgemein der Absorber 100 eingebettet. Das Absorberblech 7 weist vorzugsweise eine Wandstärke von wenigstens 0,3 mm, insbesondere wenigstens 0,4 mm, insbesondere höchstens 0,6 mm, insbesondere höchstens 0,5 mm, auf. Vorzugsweise umfasst das Absorberblech ein Aluminium bzw. eine Aluminiumlegierung. Zwischen dem Absorberblech 7 und der vorderen Glasscheibe 2 bzw. der hinteren Glasscheibe 3 ist jeweils ein Scheibenzwischenraum 14, 15 angeordnet, der im Wesentlichen einbautenfrei ausgebildet ist. Die Scheibenzwischenräume 14, 15 sind jeweils vorzugsweise mit Gas, insbesondere umfassend Argon, gefüllt.

Die vordere Glasscheibe 2 weist eine zum vorderen Scheibenzwischenraum 14 gerichtete zweite Antireflexbeschichtung 18 auf. Die zweite Antireflexbeschichtung 18 ist vorzugsweise als Low-E-Beschichtung ausgeführt. Ferner weist die Vorderseite 102 des Absorbers eine erste Antireflexbeschichtung 17 auf, die vorzugsweise als spezielle Absorberbeschichtung ausgebildet ist. Die erste Antireflexbeschichtung 17 bzw. Absorberbeschichtung ist im Hinblick auf Infrarotstrahlung vorzugsweise durch einen Absorptionsgrad von wenigstens 70%, insbesondere wenigstens 75%, insbesondere wenigstens 80%, insbesondere wenigstens 90%, insbesondere wenigstens 95%, und/oder einem Reflexionsgrad von höchstens 25%, insbesondere höchstens 20%, insbesondere höchstens 15%, insbesondere höchstens 10%, insbesondere höchstens 5%, gekennzeichnet. Die hintere Glasscheibe 3 umfasst eine Reflexionsschicht 19, die eine Low-E-Beschichtung umfassen kann. Dabei ist die Reflexionsschicht 19 dem zweiten Scheibenzwischenraum 15 zugewandt. Die Low-E-Beschichtung der zweiten Antireflexbeschichtung 18 bzw. der Reflexionsschicht 19 kann jeweils derart angepasst sein, dass von dem Absorber 100 bzw. dem Absorberblech 7 abgestrahlte Infrarotstrahlung vorwiegend reflektiert wird. Das bedeutet, dass die zweite Antireflexbeschichtung 18 und die Reflexionsschicht 19 im Hinblick auf Infrarotstrahlung jeweils einen Reflexionsgrad in Richtung des Absorbers 100 aufweisen, der größer als 50%, insbesondere größer als 70%, insbesondere größer als 90%, beträgt.

Der Absorber 100 umfasst ferner ein Absorberrohr 8, das mit dem Absorberblech 7 fest verbunden ist. Das Absorberrohr 8 wird durch die hintere Glasscheibe 3 nach außen geführt bzw. verlässt durch die hintere Glasscheibe 3 den Innenraum des Verbundglas-Solarkollektors. Dazu ist eine Flanschanordnung gemäß dem Ausführungsbeispiel nach Fig. 6 vorgesehen. Die Flanschanordnung umfasst einen inneren Flansch 26 und einen äußeren Flansch 27, wobei der äußere Flansch 27 ein Gewinde 30 umfasst, das mit einem Gegengewinde 30' des inneren Flanschs 26 schraubverbindbar ist. Der innere Flansch 26 und der äußere Flansch 27 umfassen ferner O-Ringe 28, die die Flansche 26, 27 gegen die hintere Glasscheibe 3 abdichten. Zusätzlich ist dem inneren Flansch 26 ein Dichtungsmittel 26a zugeordnet, das vorzugsweise Butyl umfasst. Das Dichtungsmittel 26a ist zwischen dem inneren Flansch 26 und der hinteren Glasscheibe 3, insbesondere zwischen den O-Ringen 28, angeordnet. Der innere Flansch 26 ist ferner mit dem Absorberrohr 8 fest verbunden, vorzugsweise verlötet. Die dazu vorgesehene Lötung 29 kann ein Hanflot umfassen.

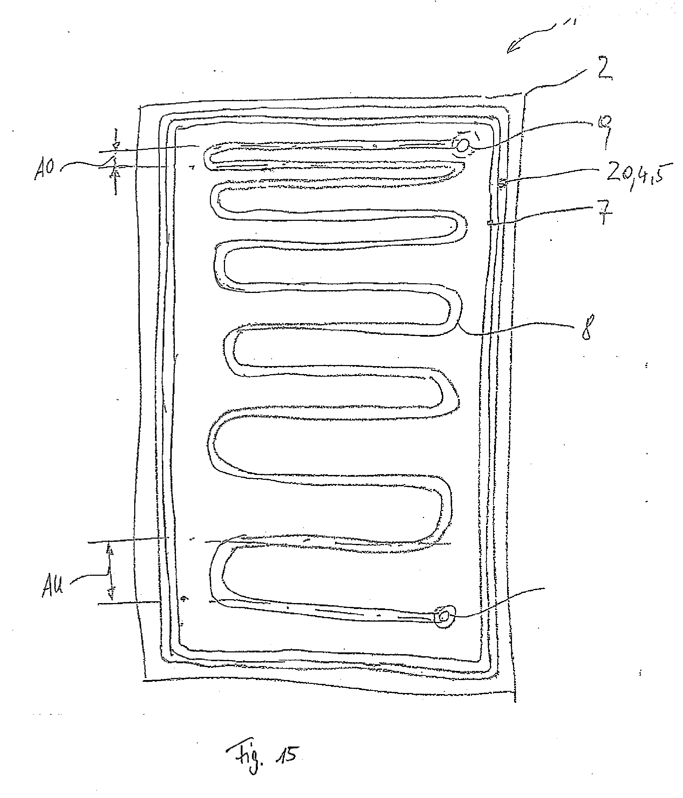

In Fig. 15 ist verdeutlicht, wie der bevorzugte Verbundglas-Solarkollektor in einem Längsschnitt aufgebaut ist. Der Verbundglas-Solarkollektor bzw. das Isolierglaselement mit integriertem Absorber 100, weist einen Absorber 100 auf, der ein Absorberblech 7 und ein mäanderförmig auf dem Absorberblech 7 angeordnetes Absorberrohr 8 umfasst. Die mäanderförmigen Windungen des Absorberrohrs 8 weisen in einem unteren Bereich des Solarkollektors einen Abstand AU auf, der größer ist als der Abstand AO der mäanderförmigen Windungen im oberen Bereich des Solarkollektors. Die Packungsdichte der Absorberrohrwindungen ist also vorzugweise im oberen Bereich des Absorbers größer als im unteren Bereich des Absorbers. Bevorzugt ist es, wenn sich der Abstand der Absorberrohrwindungen vom oberen Abstand AO zum unteren Abstand AU kontinuierlich erhöht. Bei der Verwendung des Verbundglassolarkollektors bzw. Isolierglaselements in einer Gebäudefassade hat diese Ausführungsform den Vorteil, dass die im oberen Bereich des Solarkollektors höheren Temperaturen effektiver für die Energiegewinnung bzw. Energieumwandlung nutzbar sind. Alternativ oder zusätzlich kann das Wärmetauschermedium 22 im Gegenstromprinzip durch den Absorber 100 bzw. das Absorberrohr 8 geführt werden.

In der EP 1 279 905 B1 wird ein Sonnenkollektor mit einem Absorberrohr genannt, das mit einem einstückig ausgeführten Absorberblech verbunden ist und in einem kastenförmigen Aufbau integriert ist. Mit anderen Worten wird in der EP 1 279 905 B1 ein Sonnenkollektor mit Absorberrohren genannt, die von einem Wärmeträgermedium durchströmt sind und mit einem Absorber zur Aufnahme der Sonnenenergie, der als einstückig ausgeführtes Absorberblech ausgebildet ist, das mit den Absorberrohren verbunden ist und diese überdeckt, wobei das Absorberblech vollflächig profiliert ist und die Absorberrohre vollständig überdeckt und das Absorberblech aus Kupfer oder Aluminium hergestellt ist und eine selektive Oberflächenbeschichtung aufweist und die Profilierung des Absorberblechs im Querschnitt im Wesentlichen wellig, faltenförmig oder sägezahnförmig ausgebildet ist und die Absorberrohre parallel zueinander angeordnet sind und dass die Orientierung der Profilierung des Absorberblechs parallel zu den Absorberrohren ist. Eine derartige Sonnenkollektorausführung entspricht dem Stand der Technik. Dabei werden 0,1 mm bis zu 0,5 mm dicke Kupfer- oder Aluminiumbleche mit einer herstellüblichen maximalen Blechbreite von 50 mm bis maximal 1.200 mm bzw. 1.250 mm und einer Absorberlänge bis zu etwa 3 m und mit einer Absorberbeschichtung mit etwa 95% solarem Absorptionsgrad und etwa 4% thermischem Emissionsgrad in Kombination mit Kupferrohren mit 8 mm bis 12 mm Außendurchmesser und etwa 0,5 mm Wandstärke und einem Abstand zwischen den Rohren von typisch 70 mm bis 140 mm verwendet. Beispielhaft wären die Absorberrohre mittels Ultraschall oder Laserschweißung oder Lötung bzw. allgemein mit einer thermischen Kontaktierung auf den Absorberblechen im Allgemeinen mäanderartig befestigt. Die Zuleitungen und Ableitungen können dabei weitgehend anwendungsoptimiert ausgeführt werden. Das typische Gewicht beträgt dabei 2 kg pro m² bis 3,5 kg pro m². Als Ausführungsbeispiele für handelsüblich erhältliche Absorberbleche werden beispielhaft die Produkte der Firma Alanot-Sunselect GmbH & Co. KG in D-37597 Lauenförde mit der Bezeichnung "Sunselect" bzw. der Firma TiNOX GmbH in D-80993 München mit der Bezeichnung "TiNOX Classic" bzw. "TiNOX Art-Line" genannt. In beiden Fällen wird die dünne Absorberbeschichtung im Vakuum hergestellt.

Der Solarkollektor gemäß der eingangs genannten DE 10 2006 006 718 B4 umfasst wenigstens ein Wärmetauscherrohr bzw. Wärmetauscherelement mit in den Kollektor hinein bzw. aus diesem heraus führenden Zulaufrohren bzw. Ablaufrohren, insbesondere Zuleitungen bzw. Ableitungen, und eine größtenteils transparente, flache Abdeckung, die den tragenden Bestandteil des Kollektors bildet, und der Kollektor weitgehend nur aus der größten teils transparenten Abdeckung, einem Absorber und wenigstens einem Wärmetauscherrohr gebildet ist, wobei der Absorber in einem vorgegebenen Abstand mit der Abdeckung verbunden ist. Weiter wird genannt, dass der Absorber mit der größtenteils transparenten Abdeckung bzw. mit der Glasscheibe verklebt ist. In diesem Stand der Technik bildet demzufolge eine Glasscheibe als Abdeckung den tragenden Bestandteil des Kollektors.

Diese tragende Funktion der Glasscheibe wird gemäß einem nebengeordneten Aspekt der vorliegenden Erfindung erweitert im Sinne der Verwendung eines Isolierglasaufbaus nach dem Stand der Technik, allerdings unter Berücksichtigung der durch die Integration eines Thermosolarkollektors gegebenen Temperaturen. Insbesondere werden die sogenannten primären und sekundären Haftverbundmittel auf die zu erwartenden hohen Temperaturen im Falle des Stillstandes (Stagnation) eines Kollektors ausgelegt. Die Temperaturen des Kollektors können dabei auf über 150° C bis zu etwa 200° C ansteigen. Weiter ist der Thermosolarkollektor im Innenraum des Isolierglasverbundelements derart befestigt, dass die thermische Ausdehnung berücksichtigt ist und dass eine Verwölbung aufgrund des üblicherweise asymmetrischen Kollektoraufbaus in Grenzen gehalten wird und bei höheren Kollektortemperaturen die beschichtete Kollektorblechseite nicht mit der Glasinnenseite in Berührung kommt und ferner, dass die Befestigung so ausgelegt ist, dass eine kostengünstige und dauerhafte Montage im Zuge der Isolierglasherstellung möglich ist.

Ein weiterer kritischer Punkt in der Funktion und bei der Montage stellen die Zuleitungen und Ableitungen der Kollektorrohre dar. Im einfachen Fall sind das bei einem mäanderförmigen Thermosolarkollektor zwei Durchführungen. Es können jedoch auch vier Durchführungen vorgesehen werden. Dabei können bei einem mäanderförmigen Kollektor Sammelrohre im Inneren des Isolierglases angeordnet sein. Bei Verwendung eines harfenförmigen Kollektors können die Sammelrohre ebenfalls mit vier Durchführungen ausgebildet sein.

Es hat sich gezeigt, dass eine Durchführung durch die rückseitige Glasscheibe eine sehr stabile Lösung ergibt und eine relativ einfache Montage ermöglicht, da der gesamte Kollektor bereits beim Isolierglasherstellprozess mit der rückseitigen Glasscheibe verbunden bzw. vormontiert werden kann. Die Durchführungen der Zuleitungen und Ableitungen sind zweckmäßigerweise dauerelastisch und landzeitstabil dichtend ausgebildet und es wird bevorzugt darauf geachtet, dass die metallische Durchführung nicht direkt einen Glaskontakt hat, sondern immer ein dauerelastisches und langzeitstabil dichtendes und temperaturbeständiges polymeres Element dazwischen angeordnet ist.

In einer bevorzugten Ausgestaltung der vorliegenden Erfindung liegt ein besonderer Aspekt darin, die eigentlich für die Einstrahlung der Sonnenstrahlung vorgesehenen Glasflächen eines Solarkollektors zumindest bereichsweise derart auszuführen, dass Infrarotstrahlung von der innerhalb des Solarkollektors befindlichen Oberfläche der Glasscheibe reflektiert wird. Besonders geeignet ist hierbei eine rückseitig des Absorbers vorgesehene Glasscheibe, da dies eine kompakte Bauform sowie zumindest eine Reduzierung der verwendeten Dämmstoffe ermöglicht.

Insgesamt beruht in einer weiteren bevorzugten Ausgestaltung der vorliegenden Erfindung eine Kernüberlegung auf der Integration eines Absorberelements in einer Verbundglas- bzw. Sandwich-Glaskonstruktion, wobei die nach innen gerichtete Fläche der auf der Rückseite des Absorbers vorgesehenen Glasscheibe mit einer Infrarotstrahlung reflektierenden Schicht versehen ist.

### Bezugszeichenliste

- 1: Verbundglasscheibe
- 2: Vordere Glasscheibe
- 3: Hintere Glasscheibe
- 4, 5: Abstandshalter
- 6: Y-Profil
- 6a: Haltewandung
- 6b: Füllung
- 7: Absorberblech
- 8: Absorberrohr
- 9: Zuleitung
- 10: Ableitung
- 11: primäres Haftmittel
- 12: sekundäres Haftmittel
- 13: Trocknungsmittel
- 14: vorderer Scheibenzwischenraum
- 15: hinterer Scheibenzwischenraum
- 16: thermische Verbindung
- 17: erste Antireflexbeschichtung
- 18: zweite Antireflexbeschichtung
- 19: Reflexionsschicht
- 20: Blechauflage
- 21: erste Auflage
- 22: Wärmetauschermedium
- 23: Durchbruch
- 24: Durchführung
- 25: zweite Auflage
- 26: innerer Flansch
- 26a: Dichtungsmittel
- 27: äußerer Flansch
- 28: O-Ring
- 29: Lötung
- 30: Gewinde
- 30': Gegengewinde
- 31: temperaturbeständiges Haftmittel
- 32: Winkel
- 33: Anschluss
- 34: Fixierelement
- 36: solarselektive Beschichtung
- 37: Sonne
- 38: erstes Abstandshalteelement
- 39: sechstes Abstandshalteelement
- 40: siebtes Abstandshalteelement
- 41: Sicherungsscheibe
- 42: drittes Abstandshalteelement
- 43: viertes Abstandshalteelement
- 44: Klebestelle
- 45: fünftes Abstandshalteelement
- 46: oberer Rohrabstand
- 47: unterer Rohrabstand
- 48: zweites Abstandshalteelement
- 48a: vordere Positionierhilfe
- 48b: hintere Positionierhilfe
- 100: Absorber
- 101: Stützfläche
- 102: Vorderseite
- 103: Rückseite
- 120: absorbierende Beschichtung
- 130: reflektierende Beschichtung
- 200: Abdeckung
- 300: Rückwand
- 261: Ringscheibenabschnitt
- 262: Hülsenabschnitt
- 265: Durchgangsleitung
- 266: Koppelstück
- 271: hülsenförmige Basis
- 272: Dichtungsscheibe
- AO: oberer Abstand
- AU: unterer Abstand

## Patentansprüche

1. Solarkollektor mit einem Absorber (110), der eine im Gebrauch der Sonneneinstrahlung zugewandte Vorderseite (102), und eine im Gebrauch der Sonneneinstrahlung abgewandte Rückseite (103) aufweist, wobei eine transparente Abdeckung (200) vorgesehen ist, die der Vorderseite (102) des Absorbers (100) im Wesentlichen planparallel gegenüberliegend angeordnet ist,
**dadurch gekennzeichnet, dass**
der Rückseite (103) des Absorbers (100) ein Infrarotstrahlen reflektierendes Medium zugeordnet ist, das in Richtung des Absorbers (100) reflektierend wirksam ist.

2. Solarkollektor nach Anspruch 1,
**dadurch gekennzeichnet, dass**
das Infrarotstrahlen reflektierende Medium eine Infrarotstrahlen reflektierende Beschichtung und/oder Infrarotstrahlen reflektierende Zusätze umfasst.

3. Solarkollektor nach Anspruch 1 oder 2,
**gekennzeichnet durch**
eine Rückwand (300), die der Rückseite (103) des Absorbers (100) gegenüberliegend angeordnet ist.

4. Solarkollektor nach Anspruch 4,
**dadurch gekennzeichnet, dass**
die Rückwand (300) als transparente Scheibe, insbesondere Glasscheibe (3) oder Kunststoffscheibe, ausgebildet ist und wenigstens bereichsweise das Infrarotstrahlen reflektierende Medium umfasst.

5. Solarkollektor nach Anspruch 3 oder 4,
**dadurch gekennzeichnet, dass**
die Abdeckung (200) und die Rückwand (300) jeweils ein Glas, insbesondere eine Glasscheibe, umfassen, das die äußere Begrenzung des Solarkollektors bildet.

6. Solarkollektor nach wenigstens einem der Ansprüche 3 bis 5,
**dadurch gekennzeichnet, dass**
die Abdeckung (200) und/oder die Rückwand (300), insbesondere das Infrarotstrahlen reflektierende Medium, ein Wärmedämmglas umfassen.

7. Solarkollektor nach wenigstens einem der Ansprüche 3 bis 6,
**dadurch gekennzeichnet, dass**
eine Verbundglaskonstruktion in einer Sandwichbauweise vorgesehen ist, wobei der Absorber (100) zwischen zwei Glasscheiben (2, 3) angeordnet ist, die jeweils die Abdeckung (200) und die Rückwand (300) bilden.

8. Solarkollektor nach wenigstens einem der Ansprüche 3 bis 7,
**dadurch gekennzeichnet, dass**
das Infrarotstrahlen reflektierende Medium pigmentartige Körper, insbesondere Glaskugeln, umfasst, die auf der der Rückseite (103) des Absorbers (100) zugewandten Seite der Rückwand (300) angeordnet sind.

9. Solarkollektor nach wenigstens einem der Ansprüche 3 bis 8,
**dadurch gekennzeichnet, dass**
die Abdeckung (200) und die Rückwand (300) vom Absorber (100) beabstandet angeordnet und durch einen Rahmen verbunden sind.

10. Solarkollektor nach wenigstens einem der Ansprüche 1 bis 7,
**dadurch gekennzeichnet, dass**
zwischen der Abdeckung (200) und der Rückwand (300) ein Scheibenzwischenraum (14) vorgesehen ist, der gegenüber der Umgebung gasdicht abgeschlossen ist.

11. Solarkollektor nach wenigstens einem der Ansprüche 1 bis 10,
**dadurch gekennzeichnet, dass**
der Solarkollektor in Form einer Verbundglasscheibe (1) ausgeführt ist, die zwei außen angeordnete, Glasscheiben (2, 3) und im Inneren den Absorber (100) aufweist.

12. Solarkollektor nach Anspruch 11,
**dadurch gekennzeichnet, dass**
die Glasscheiben (2, 3) jeweils die Abdeckung (200) und die Rückwand (300) bilden.

13. Solarkollektor nach Anspruch 11 oder 12,
**dadurch gekennzeichnet, dass**
die dem Absorber (100) zugewandten Oberflächen der Glasscheiben (2, 3) zumindest abschnittsweise das Infrarotstrahlen reflektierende Medium umfassen.

14. Solarkollektor nach wenigstens einem der Ansprüche 1 bis 13,
**dadurch gekennzeichnet, dass**
der Solarkollektor als Flachkollektor oder Röhrenkollektor ausgebildet ist, wobei ein erster Glasbereich, insbesondere eine erste Glasscheibe (2) auf der der Sonneneinstrahlung zugewandten Seite des Solarkollektors als Solarglasscheibe und ein zweiter Glasbereich, insbesondere eine zweite Glasscheibe (3), auf der der Sonneneinstrahlung abgewandten Seite des Solarkollektors als Wärmedämmglas ausgebildet ist.

15. Verbundscheibe, insbesondere Verbundglasscheibe (1), mit einem Rahmen, der wenigstens zwei voneinander beabstandet und zueinander planparallel angeordnete, transparente Scheiben gasdicht verbindet, wobei die transparenten Scheiben jeweils ein nach innen wirkendes, Infrarotstrahlen reflektierendes Medium aufweisen und wobei zwischen den transparenten Scheiben wenigstens ein Absorber (100) für Solarenergie angeordnet ist.

16. Absorber (100), insbesondere für einen Solarkollektor nach Anspruch 1 mit einer Vorderseite (102), einer Rückseite (103) und wenigstens einem Fluidkanal für ein Wärmetauschermedium (22), der zwischen der Vorderseite (102) und der Rückseite (103) angeordnet ist, wobei die Rückseite (103) zumindest bereichsweise ein Infrarotstrahlen reflektierendes Medium, insbesondere eine Infrarotstrahlen reflektierende Beschichtung, aufweist, die in Richtung des Fluidkanals reflektierend wirksam ist.

17. Absorber (100) nach Anspruch 16,
**dadurch gekennzeichnet, dass**
die Vorderseite (102) zumindest bereichsweise eine Infrarotstrahlen absorbierende Beschichtung aufweist.

18. Verwendung eines Absorbers (100) gemäß Anspruch 16 in einem Solarkollektor gemäß Anspruch (1) oder einer Verbundscheibe gemäß Anspruch (15).
